# EUROPEAN PATENT SPECIFICATION

(11) **EP 4 307 056 B1**
(45) Date of publication and mention of the grant of the patent: **28.10.2026**
(21) Application number: 22787367.6
(22) Date of filing: 28.03.2022
(51) Int. Cl.: H04L 12/12

(54) **EVENT PROCESSING METHOD AND SYSTEM, AND DEVICE**
EREIGNISVERARBEITUNGSVERFAHREN UND -SYSTEM SOWIE VORRICHTUNG
PROCÉDÉ ET SYSTÈME DE TRAITEMENT D'ÉVÉNEMENT, ET DISPOSITIF

(30) Priority: 16.04.2021 CN 202110412920
(43) Date of publication of application: 17.01.2024
(73) Proprietor: Huawei Technologies Co., Ltd., Longgang Shenzhen, Guangdong 518129 (CN)
(72) Inventor: WANG, Ying, Shenzhen, Guangdong 518129 (CN)
(74) Representative: Grünecker Patent- und Rechtsanwälte PartG mbB
(86) International application number: PCT/CN2022/083306
(87) International publication number: WO 2022/218138

(56) References cited:
- CN-A- 106 534 796
- CN-A- 107 545 698
- CN-A- 107 633 653
- CN-A- 109 634 129
- CN-A- 109 686 052
- CN-A- 109 947 003
- CN-A- 110 045 621
- CN-A- 110 347 049
- CN-A- 111 614 524
- CN-A- 111 650 840
- US-A1- 2016 285 644
- US-A1- 2018 122 506
- US-A1- 2019 098 725
- US-A1- 2020 348 640

## Description

### TECHNICAL FIELD

This application relates to the terminal field, and in particular, to an event processing method, a device, and a system.

### BACKGROUND

With the continuous popularization of the internet of things (internet of things, IoT) in the home field, there are an increasing quantity of smart devices, including wearable products, in a home. These devices may implement various combinations of smart scenarios by using various linkage mechanisms, so that a user can experience convenience of smart home life. According to user surveys, an IoT enthusiast family may have dozens of or even one hundred or two hundred IoT devices currently.

Currently, smart home devices have become a part of people's daily life. A smart home (smart home or home automation) connects various electronic devices (such as an audio and video device, a lighting system, a curtain control, an air conditioner control, a security protection system, a digital theater system, a video server, a film system, and an internet appliance) at home by using IoT technologies to provide a plurality of functions such as appliance control, lighting control, telephone remote control, indoor and outdoor remote control, an anti-theft alarm, environmental monitoring, heating and ventilation control, infrared forwarding, and programmable timing control.

US 2016/0285644 A1 describes a method and device for smart home that include a second device obtaining first identification information for identifying a first device with the second device transmitting the first identification information to a server through a second data channel, wherein, the first identification information is used for the server to establish a binding relationship between the first device and the second device, the binding relationship indicating that the first device and the second device belong to the same user.

How to improve smart care of smart home devices for users is an urgent problem to be resolved.

### SUMMARY

The present invention is defined by the claims. Embodiments of this application provide an event processing method, to provide, by monitoring a smart device in a scenario event, smart care for a user who uses the smart device. The invention provides an event processing method according to claim 1, an electronic device according to claim 13, a computer-readable storage medium according to claim 14 and a computer program product according to claim 15. Further embodiments are defined in the dependent claims.

A first aspect of embodiments of this application provides an event processing method. The method may be performed by an electronic device, or may be performed by a component (for example, a processor, a chip, or a chip system) of the electronic device. The method includes: determining a scenario event, where the scenario event includes one or more first events, the one or more first events are obtained by monitoring one or more first smart devices, and the first event includes that the first smart device performs a first function, or includes that a state of the first smart device changes; obtaining a first rule, where the first rule includes a linkage condition and a linkage event, the linkage condition is related to the scenario event, and the linkage event is used to remind that a user (which may also referred to as a second user) who uses the one or more first smart devices is abnormal; and monitoring the one or more first smart devices, and executing the linkage event if the one or more first smart devices meet the linkage condition.

In this embodiment of this application, smart care can be provided, by monitoring the smart device in the scenario event, for the second user who uses the smart device. A quantity of times a first user manually sets the one or more first events is reduced, thereby reducing complexity of creating the scenario event. In addition, the scenario event obtained by monitoring the smart device better satisfies an actual use habit of the second user, thereby improving accuracy of smart care, and avoiding incorrect care caused by a scenario event that does not satisfy the actual use habit of the second user. It may be understood that the first user and the second user may be a same user or different users. This is not specifically limited herein.

Optionally, in a possible implementation of the first aspect, the foregoing step of determining a scenario event includes: monitoring a function performed by the one or more first smart devices or a state change of the one or more first smart devices in a first preset time period, to obtain one or more second events, where the one or more second events include the one or more first events; and determining that the scenario event includes the one or more first events.

In this possible implementation, the scenario event is obtained through recording by the electronic device, and the first user may determine the scenario event by using the electronic device and provide smart care for the second user who uses the smart device in the scenario event.

Optionally, in a possible implementation of the first aspect, the foregoing step further includes: sending request information to a cloud device, where the request information indicates the cloud device to monitor a function performed by the one or more first smart devices or a state change of the one or more first smart devices in the first preset time period; and the determining a scenario event includes: receiving one or more second events that are sent by the cloud device and that are obtained through monitoring, where the one or more second events include the one or more first events; and determining that the scenario event includes the one or more first events.

In this possible implementation, the scenario event is obtained and recorded by the cloud, so that memory consumption caused by recording the scenario event by the electronic device can be reduced.

Optionally, in a possible implementation of the first aspect, the determining that the scenario event includes the one or more first events in the foregoing step includes: presenting the one or more second events; receiving a first operation of a first user; and in response to the first operation, determining the one or more first events from the one or more second events, where a quantity of first events is less than or equal to a quantity of second events.

In this possible implementation, the first user may obtain the one or more first events by performing filtration on the detected second event, so as to reduce impact of using the first smart device by another user on monitoring a habit of using the first smart device by the second user, and improve accuracy of the smart care for the second user.

Optionally, in a possible implementation of the first aspect, the scenario event in the foregoing step further includes first information associated with the first event, and the first information includes at least one of an occurrence place of the first event, an identifier of the first smart device, the first function, a time interval between at least two first events, and a time sequence relationship between the at least two first events.

In this possible implementation, the scenario event not only includes the first event, but also includes the first information associated with the first event, for example, the occurrence place of the first event, the identifier of the first smart device, the first function, the time interval between the at least two first events, and the time sequence relationship between the at least two first events. In this way, the scenario event obtained through recording has more details, so as to implement monitoring on each first smart device, and further implement accurate care for the second user.

Optionally, in a possible implementation of the first aspect, the foregoing step of obtaining a first rule includes: receiving a second operation of the first user; and setting the first rule in response to the second operation.

In this possible implementation, the first user may set the first rule associated with the scenario event, and smart care may be provided, by setting the first rule, for the second user who uses the second smart device.

Optionally, in a possible implementation of the first aspect, the linkage condition in the foregoing step is related to a quantity of occurrence times and/or occurrence duration of the scenario event.

In this possible implementation, it is further limited that the linkage condition is related to a parameter of the scenario event. This may also be understood as that the linkage condition is related to one or more first events that are recorded, so as to implement more accurate smart care.

Optionally, in a possible implementation of the first aspect, the linkage condition in the foregoing step includes at least one of the following: the quantity of occurrence times of the scenario event is greater than or equal to a first preset threshold; the occurrence duration of the scenario event is greater than or equal to a second preset threshold; a quantity of occurrence times of the scenario event in a second preset time period is greater than or equal to a third preset threshold; or occurrence duration of the scenario event in a third preset time period is greater than or equal to a fourth preset threshold.

Optionally, in a possible implementation of the first aspect, the executing the linkage event in the foregoing step includes at least one of the following: sending abnormal information to a terminal device, where the abnormal information is used to remind that the second user who uses the one or more first smart devices is abnormal; stopping running the first smart device; or triggering a second smart device to perform a second function.

In this possible implementation, the first user may determine, based on the linkage condition, whether the second user is abnormal, and discover, according to the first rule and in a timely manner, that the second user who uses the smart device is abnormal, thereby providing an implementation of the smart care. For example, if the second user is abnormal, a third user may receive the abnormal information, and may determine the exception of the second user based on the abnormal information.

Optionally, in a possible implementation of the first aspect, the one or more first smart devices in the foregoing steps belong to a same account of the first user. Alternatively, the one or more first smart devices belong to a same local area network.

In this possible implementation, the scenario event includes the one or more first smart devices under the same account. In a multi-account scenario, accuracy of determining the exception of the second user is improved.

Optionally, in a possible implementation of the first aspect, the foregoing method may be applied to a smart home scenario, and the smart device is a smart home device.

In this possible implementation, the smart care may be performed on the second user who uses the smart home device.

Optionally, in a possible implementation of the first aspect, the plurality of first smart devices in the foregoing step include a first smart light in a bedroom, a second smart light in a bathroom, and a smart flush toilet in the bathroom; and the scenario event includes three first events, where a 1^{st} first event includes that the first smart light changes from turned off to turned on, a 2^{nd} first event includes that the second smart light changes from turned off to turned on, and a 3^{rd} first event includes that the smart flush toilet performs a flush function; and the executing the linkage event if the one or more first smart devices meet the linkage condition includes: if the quantity of occurrence times of the scenario event in the second preset time period is greater than or equal to the third preset threshold, sending the abnormal information to the terminal device, where the abnormal information is used to remind that the second user who uses the one or more first smart devices is abnormal.

This possible implementation is an application in the smart home scenario. For example, the foregoing second user is an elderly person, the scenario event is "getting up at night to urinate", the second preset time period is at night (from 24:00 to 06:00), and the third preset threshold is 3. In this case, the foregoing process may be understood as that a quantity of occurrence times of the scenario event that the elderly person gets up at night to urinate is generally 1, but if a quantity of times of the scenario event that the elderly person gets up at night to urinate is greater than 3, there is a reason to consider that the elderly person is abnormal, and the abnormal information is sent to the terminal device, so as to provide smart care for the elderly person.

A second aspect of embodiments of this application provides an electronic device. The electronic device includes a determining unit, an obtaining unit, a monitoring unit, and an execution unit. Operations performed by units in the electronic device are similar to operations performed by the electronic device in the foregoing first aspect or any possible implementation of the first aspect. Details are not described herein again.

A third aspect of embodiments of this application provides an electronic device, including a processor. The processor is coupled to a memory, the memory is configured to store a program or instructions, and when the program or the instructions are executed by the processor, the electronic device is enabled to implement the method according to the foregoing first aspect or any possible implementation of the first aspect.

A fourth aspect of embodiments of this application provides a computer-readable storage medium. The computer-readable storage medium stores instructions. When the instructions are executed on a computer, the computer is enabled to perform the method according to the foregoing first aspect or any possible implementation of the first aspect.

A fifth aspect of embodiments of this application provides a computer program product. When the computer program product is executed on a computer, the computer is enabled to perform the method according to the foregoing first aspect or any possible implementation of the first aspect.

For technical effects brought by the second aspect, the third aspect, the fourth aspect, the fifth aspect, or any one of the possible implementations, refer to technical effects brought by the first aspect or the different possible implementations of the first aspect. Details are not described herein again.

### BRIEF DESCRIPTION OF DRAWINGS

FIG. 1 is an example diagram of a smart home system according to this application;
FIG. 2 is an example diagram of a hardware structure of an electronic device according to this application;
FIG. 3 is an example diagram of a software structure of an electronic device according to this application;
FIG. 4 is a schematic flowchart of an event processing method according to this application;
FIG. 5(a) to FIG. 7(d) are example diagrams of an interface for creating a new scenario event according to this application;
FIG. 8 is an example diagram of a walking route of a user in a "getting up at night to urinate" scenario according to this application;
FIG. 9A(a) to FIG. 9B are example diagrams of an interface for determining a "getting up at night to urinate" scenario according to this application;
FIG. 10 to FIG. 12 are example diagrams of an interface for setting a linkage task according to this application;
FIG. 13 is an example diagram of an interface for abnormal information according to this application;
FIG. 14 is another schematic diagram of a structure of an electronic device according to an embodiment of this application; and
FIG. 15 is another schematic diagram of a structure of an electronic device according to an embodiment of this application.

### DESCRIPTION OF EMBODIMENTS

Embodiments of this application provide an event processing method. By monitoring a smart device in a scenario event, smart care can be provided for a user who uses the smart device.

For ease of understanding, the following first describes related terms and concepts that are mainly related to embodiments of this application.

### (1) Network configuration for a device

When an IoT device first accesses a home wireless fidelity (wireless fidelity, Wi-Fi) network, a service set identifier (service set identifier, SSID) and a password of the home Wi-Fi are sent to the device by using an application (application, APP), so that the device can be connected to the home Wi-Fi to access a network and complete device registration and binding through the network.

### (2) IFTTT (if this then that) rule

"This" may be considered as a trigger condition, and "that" may be considered as an execution operation or an execution event of a device. This may be simply understood as follows: If one event is triggered, another event that has been set is executed. In other words, if a trigger condition in the IFTTT rule is met, a corresponding operation in the IFTTT rule is performed. For example, if a smart door lock identifies that a person at a door succeeds in biometric authentication (the trigger condition), the door automatically opens (the execution event).

The foregoing trigger condition may also be referred to as the trigger event. If a device A in the IFTTT rule performs an operation or some operations, or a parameter detected by the device A meets a condition or some conditions, a device B performs a corresponding operation. In this case, the device A may be referred to as a condition device, and the device B may be referred to as an execution device. In the IFTTT rule, there may be one or more condition devices, and there may be one or more execution devices. This is not limited in embodiments of this application.

For example, one IFTTT rule is as follows: If a device A performs an operation or some operations (or a parameter detected by the device A meets a condition or some conditions), and a device C performs an operation or some operations (or a parameter detected by the device C meets a condition or some conditions), a device B performs a corresponding operation. In this IFTTT rule, the device A and the device C are condition devices, and the device B is an execution device.

For another example, another IFTTT rule is as follows: If a device A performs an operation or some operations (or a parameter detected by the device A meets a condition or some conditions), a device B performs a corresponding operation, and a device D performs a corresponding operation. In this IFTTT rule, the device A is a condition device, and the device B and the device D are execution devices.

It should be noted that, in some embodiments, there may alternatively be no condition device in the IFTTT rule. In this case, the execution device may automatically perform a corresponding operation based on a condition such as a local time.

### (3) Event

The event may be that a device enables a function, or may be that the device performs an action, or may be a process in which the device changes from one state to another state, or the like. This is not specifically limited herein.

### (4) Smart home (smart home or home automation)

The smart home integrates home life-related facilities by using a house as a platform and by using an integrated wiring technology, a network communication technology, a security protection technology, an automatic control technology, and an audio/video technology, to construct an efficient management system for residential facilities and family schedule affairs, so as to improve safety, convenience, comfort, and artistry of a home, and implement an environmentally friendly and energy-saving living environment.

### (5) Home hub

The home hub is an intermediate device with a privacy function. For example, the home hub is a forwarding device between a mobile phone and a cloud. The home hub receives information sent by the mobile phone, removes information about personal privacy carried in the information, and forwards the information to the cloud.

In a smart home system, a user may install a smart home-related application (application, APP) on a terminal, and remotely control a smart home device by operating the APP on the terminal. Certainly, the user may alternatively operate the smart home device to control the smart home device.

However, a linkage between events requires the user to manually configure a linkage scenario in advance. A configuration operation is complex and configuration effect does not satisfy an actual use habit of the user. An inappropriate setting may not only fail to bring convenience to the user, but also trigger an inappropriate linkage, causing interference.

To resolve the foregoing problems, embodiments of this application provide an event processing method: recording an operation/a function performed by a smart device or a state change of the smart device within a period of time, generating a scenario event, and setting a linkage rule of the scenario event; and if a linkage condition is met, triggering a preset linkage event. In this case, an operation that the user configures the linkage scenario is reduced. In addition, the scenario event is enabled to better satisfy the actual use habit of the user. Smart care for a user who uses a smart device can be implemented. The method provided in embodiments of this application may be applied to a smart scenario such as a smart home scenario, a smart office scenario, a smart restaurant, or a smart parking lot. This is not specifically limited herein. The following describes the method provided in embodiments of this application by using the smart home scenario as an example.

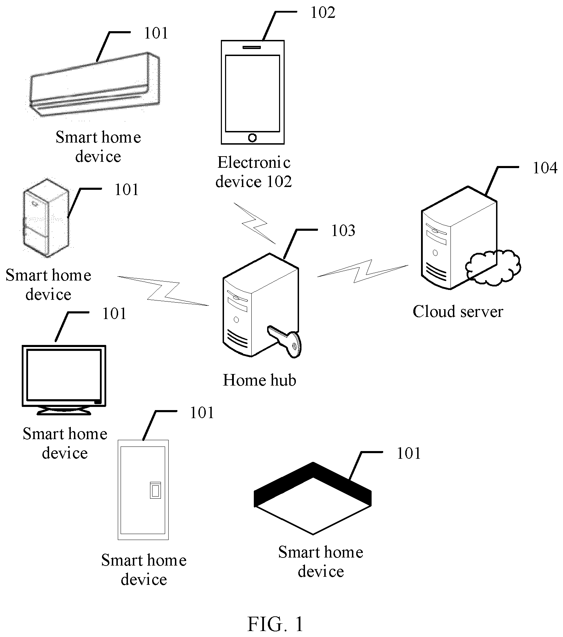

FIG. 1 is an example diagram of a smart home system according to an embodiment of this application. The smart home system includes a smart home device 101, an electronic device 102, a home hub 103, and a cloud server 104.

Optionally, the smart home device 101 and/or the electronic device 102 in a local network may establish a connection to the cloud server 104 in a wired manner, through wireless fidelity (wireless fidelity, Wi-Fi), through a mobile data network, or in another connection manner, or establish a connection to the cloud server 104 by using a router in a local area network, or connect to the cloud server 104 by using the home hub 103. The cloud server 104 may be a server or a server cluster such as a home cloud or an IoT, and may connect various electronic and electrical devices in a home for unified management, remote monitoring, resource sharing, and the like, so as to implement an efficient and convenient living environment. If there are a plurality of smart home devices, the plurality of smart home devices may be in a same local area network or belong to a same account. It may be understood that a home may also include a plurality of local area networks or a plurality of accounts, and each local area network or each account correspondingly includes one or more smart home devices. For example, an account A includes smart home devices 1 to 4, and an account B includes smart home devices 5 to 10. This is not specifically limited herein.

In a possible implementation, a user may send a control rule to the home hub 103 by using the electronic device 102. After receiving the control rule, the home hub 103 sends the control rule to the smart home device 101. In some other embodiments, the smart home device 101 and the electronic device 102 may alternatively be connected in a wireless manner for communication. For example, the user may perform an operation on a smart home APP installed on the electronic device 102, and remotely control the smart home device 101 through a wireless communication network (such as a 3G network or a 4G network), through Bluetooth, or through Wi-Fi to transmit the control rule. A specific communication manner is not limited in this embodiment of this application. Optionally, the user may directly perform an operation on the smart home device 101 to control the smart home device 101. It should be noted that the control rule may also be understood as a control instruction. After receiving the control instruction, the smart home device performs a corresponding operation. It may be understood that the smart home device 101 has been registered on the cloud server 104 and is associated with the electronic device 102. In other words, the smart home device 101 has been successfully paired with the electronic device 102. In this case, the user may control the smart home device 101 by using the electronic device 102. For example, the smart home device 101 is associated with a user name, or the smart home device 101 is associated with a device identifier, or the smart home device 101 is associated with the home hub 103 shown in FIG. 1. For ease of description, in this embodiment of this application, the smart home device has been paired with a specific electronic device, a specific user, or a specific home hub.

Optionally, after receiving the control rule, the smart home device 101 performs a corresponding operation according to the control rule, and reports status information of the smart home device 101 to the home hub 103. For example, the smart home device 101 is a smart air conditioner, and the smart air conditioner is in a standby state before receiving the control rule. When the smart air conditioner receives a control rule for enabling a cooling mode, the smart air conditioner enables the cooling mode, and reports status information of the current cooling mode to the home hub 103. In some other embodiments, the smart home device 101 may alternatively be a rice cooker, an air conditioner, a water heater, a smart door lock, or the like. For ease of description, the home device described in this application is a smart home device. For different smart home devices, current statuses or functions may be different.

Main functions of the foregoing home hub 103 are as follows: The home hub 103 may be configured to connect the smart home device 101, the electronic device 102, and the cloud server 104, to implement communication between the smart home device 101, the electronic device 102, and the cloud server 104. In addition, the home hub 103 may be further configured to ensure user privacy security. For example, the home hub 103 receives information sent by the electronic device 102, removes information about user privacy carried in the information, and then forwards obtained information to the cloud server 104. Certainly, the smart home system may alternatively not include a home hub. This is not specifically limited herein.

In addition, the home hub 103 may be configured to store status information of the smart home device 101. For example, the home hub 103 may store latest status information of the smart home device 101. For another example, the home hub 103 may alternatively store status information of the smart home device 101 in different time periods. This is not limited. In addition, if there is no home hub 103 in the smart home system, an operation performed by the foregoing home hub may be performed by a cloud server.

In this embodiment of this application, the smart home device 101 may be a mobile terminal, a home appliance, a sensor, or the like. For example, the smart home device 101 may be a smart television, a smart light, a smart socket, an air purifier, a humidifier, a smart water dispenser, a smart range hood, a smart desk lamp, a smart speaker, a smart door lock, a smart power strip, a smart induction cooker, a smart camera, a smart feeder, a smart refrigerator, or the like, or may alternatively be a smoke sensor (which is configured to detect whether there is a gas leak in a room), a human sensor (which is configured to sense whether there is a human passing), a temperature sensor (which is configured to detect a temperature value of a room or an object), a humidity sensor (which is configured to detect a humidity value of a room), a door and window sensor (which is configured to detect whether a door or window is open or closed), a PM2.5 air sensor (which is configured to detect a value of PM2.5 in a room), or the like. A specific function type of the smart home device is not limited herein.

In this embodiment of this application, the electronic device 102 may be a device such as a mobile phone, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a wearable electronic device, or a smart watch. This is not specifically limited herein.

Specific forms of the foregoing smart home device, the electronic device, the home hub, and the cloud server are not specially limited in this embodiment of this application.

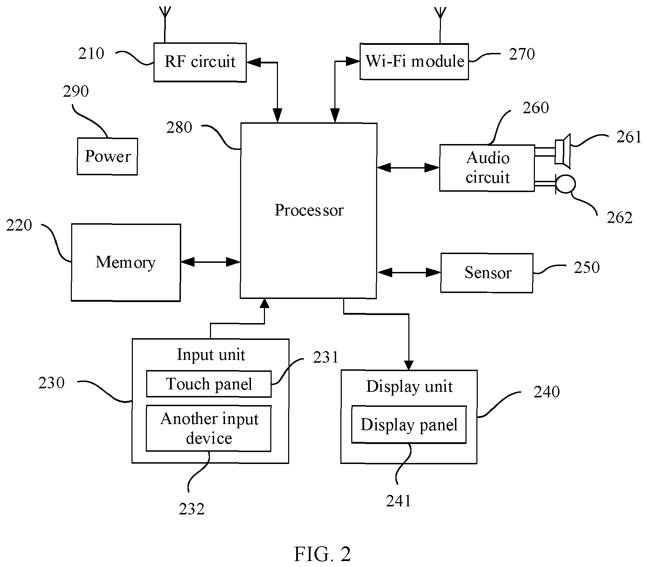

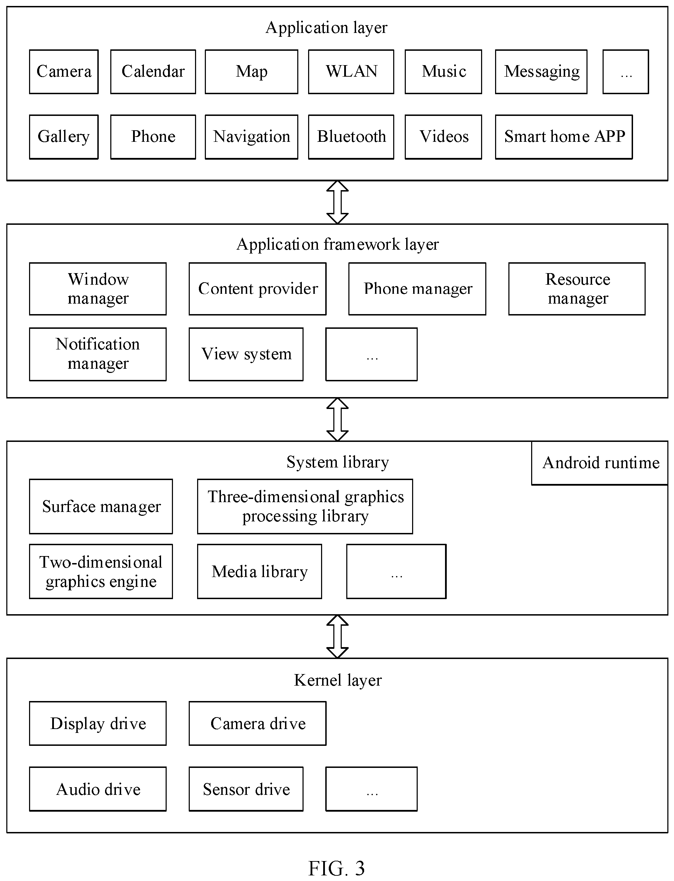

For a structure of the electronic device 102 in this embodiment of this application, refer to a structure of the electronic device 102 shown in FIG. 2 and a schematic diagram of a software structure of the electronic device 102 shown in FIG. 3. It should be noted that the electronic device 102 may include more or fewer components than those shown in the figure, or some components may be combined, or some components may be split, or there may be a different component arrangement. The components shown in the figure may be implemented by hardware, software, or a combination of software and hardware.

FIG. 2 shows an example of a structure of an electronic device according to an embodiment of this application (for example, the electronic device is a smartphone). FIG. 2 is a block diagram of a partial structure related to the electronic device according to an embodiment of this application. Refer to FIG. 2. The electronic device includes components such as a radio frequency (radio frequency, RF) circuit 210, a memory 220, an input unit 230, a display unit 240, a sensor 250, an audio circuit 260, a wireless fidelity (wireless fidelity, Wi-Fi) module 270, a processor 280, and a power supply 290. A person skilled in the art may understand that the structure of the electronic device shown in FIG. 2 does not constitute any limitation on the electronic device, and may include more or fewer components than those shown in the figure, or combine some components, or have a different component arrangement.

The following specifically describes the components of the electronic device with reference to FIG. 2.

The RF circuit 210 may be configured to receive and send a signal in an information receiving and sending process or a call process. The RF circuit 210 usually includes but is not limited to an antenna, at least one amplifier, a transceiver, a coupler, a low noise amplifier (low noise amplifier, LNA), a duplexer, and the like. In addition, the RF circuit 210 may further communicate with a network and another device (such as a smart home device, a home hub, or a cloud server shown in FIG. 1) through wireless communication. The foregoing wireless communication may use any communication standard or protocol, including but not limited to: a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The memory 220 may be configured to store a software program and a module. The processor 280 runs the software program and the module that are stored in the memory 220, to execute various function applications and data processing of the electronic device. The memory 220 may mainly include a program storage area and a data storage area. The program storage area may store an operating system, an application required for at least one function (such as a sound play function and an image play function), and the like. The data storage area may store data (such as audio data and a phone book) created based on use of the electronic device. In addition, the memory 220 may include a high-speed random access memory, or may include a nonvolatile memory such as at least one magnetic disk storage device, a flash memory, or another volatile solid-state storage device.

The input unit 230 may be configured to: receive input digit or character information and generate a button signal input related to a user setting and function control of the electronic device. Specifically, the input unit 230 may include a touch panel 231 and another input device 232. The touch panel 231, also referred to as a touchscreen, may collect a touch operation of the user on or near the touch panel 231 (such as an operation of the user on the touch panel 231 or near the touch panel 231 by using any suitable object or accessory such as a finger or a stylus), and drive a corresponding connection apparatus according to a preset program. Optionally, the touch panel 231 may include two parts: a touch detection apparatus and a touch controller. The touch detection apparatus detects a touch direction of the user, detects a signal brought by the touch operation, and transmits the signal to the touch controller. The touch controller receives touch information from the touch detection apparatus, converts the touch information into touch point coordinates, and sends the touch point coordinates to the processor 280. The touch controller can receive and execute a command sent by the processor 280. In addition, the touch panel 231 may be implemented in a plurality of types, such as a resistive type, a capacitive type, an infrared type, and a surface acoustic wave type. In addition to the touch panel 231, the input unit 230 may further include the another input device 232. Specifically, the another input device 232 may include but is not limited to one or more of a physical keyboard, a functional key (such as a volume control key or a power key), a trackball, a mouse, a joystick, and the like.

The display unit 240 may be configured to display information entered by the user, information provided for the user, and various menus of the electronic device. The display unit 240 may include a display panel 241. Optionally, the display panel 241 may be configured in a form of a liquid crystal display (liquid crystal display, LCD), an organic light-emitting diode (organic light-emitting diode, OLED), or the like. Further, the touch panel 231 may cover the display panel 241. After detecting the touch operation on or near the touch panel 231, the touch panel 231 transmits the touch operation to the processor 280 to determine a type of a touch event. Subsequently, the processor 280 provides a corresponding visual output on the display panel 241 based on the type of the touch event. Although the touch panel 231 and the display panel 241 are used as two separate components to implement input and output functions of the electronic device in FIG. 2, in some embodiments, the touch panel 231 and the display panel 241 may be integrated to implement the input and output functions of the electronic device.

The electronic device may further include at least one type of sensor 250, such as a light sensor, a motion sensor, and another sensor. Specifically, the light sensor may include an ambient light sensor and an optical proximity sensor. The ambient light sensor may adjust luminance of the display panel 241 based on luminance of ambient light. The optical proximity sensor may power off the display panel 241 and/or backlight when the electronic device moves to an ear. As a type of the motion sensor, an accelerometer sensor may detect magnitudes of acceleration in various directions (usually on three axes), may detect a magnitude and a direction of gravity when the electronic device is still, and may be used for an application that recognizes a posture of the electronic device (such as landscape-portrait switching, a related game, and magnetometer posture calibration), a function related to vibration recognition (such as a pedometer or knock recognition), and the like. For other sensors (such as a fingerprint sensor, a gyroscope, a barometer, a hygrometer, a temperature sensor, and a bone conduction sensor) such as a thermometer, and an infrared sensor that may also be disposed in the electronic device. Details are not described herein.

The audio circuit 260, a speaker 261, and a microphone 262 may provide an audio interface between the user and the electronic device. The audio circuit 260 may transmit a received electrical signal that is converted from audio data to the speaker 261. The speaker 261 converts the electrical signal into a sound signal for output. In addition, the microphone 262 converts a collected sound signal into an electrical signal. The audio circuit 260 receives the electrical signal and converts the electrical signal into audio data, and then outputs the audio data to the processor 280 for processing. Then, the audio data is sent to, for example, another electronic device by using the RF circuit 210, or the audio data is output to the memory 220 for further processing.

Wi-Fi is a short-distance wireless transmission technology. The electronic device may help, by using the Wi-Fi module 270, the user to receive and send an email, browse a webpage, access streaming media, and the like. The Wi-Fi module 270 provides wireless broadband Internet access for the user. Although the Wi-Fi module 270 is shown in FIG. 2, it may be understood that the Wi-Fi module 270 is not a mandatory component of the electronic device.

The processor 280 is a control center of the electronic device, connects to various parts of the entire electronic device by using various interfaces and lines, and performs various functions and data processing of the electronic device by running or executing a software program and/or a module stored in the memory 220 and invoking data stored in the memory 220, so as to perform overall monitoring on the electronic device. Optionally, the processor 280 may include one or more processing units. Preferably, an application processor and a modem processor may be integrated into the processor 280. The application processor mainly processes an operating system, a user interface, an application, and the like. The modem processor mainly processes wireless communication. It may be understood that the foregoing modem processor may not be integrated into the processor 280.

The electronic device further includes the power supply 290 (such as a battery) that supplies power to each component. Preferably, the power supply may be logically connected to the processor 280 by using a power management system, to implement functions such as charging management, discharging management, and power consumption management by using the power management system.

Although not shown in the figure, the electronic device may further include a camera, a Bluetooth module, and the like. Details are not described herein.

A software system of an electronic device may use a layered architecture, an event-driven architecture, a microkernel architecture, a microservice architecture, or a cloud architecture. In this embodiment of the present invention, an Android system of a layered architecture is used as an example to illustrate a software architecture of an electronic device 100.

FIG. 3 is a block diagram of a software structure of an electronic device according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application layer may include the application packages such as Camera, Gallery, Calendar, Phone, Map, Navigation, WLAN, Bluetooth, Music, Videos, and Messaging.

In some embodiments of this application, the application layer may include a first application, the first application may be a smart home App, and a user may set and manage a smart home device by using the application. For example, the user may set an IFTTT rule by using the first application, and a plurality of smart home devices in a home network may be linked according to the IFTTT rule that is set by the user, to provide a smart home life for the user.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, a phone book, and the like.

The view system includes visual controls such as a control for displaying a text and a control for displaying a picture. The view system may be configured to construct the application. A display interface may include one or more views. For example, a display interface including a short message service message notification icon may include a view for displaying the text and a view for displaying the picture.

The phone manager is configured to provide a communication function of the electronic device, for example, management of a call status (including answering, declining, or the like).

The resource manager provides various resources, such as a localized character string, an icon, a picture, a layout file, and a video file, for the application.

The notification manager enables the application to display notification information in the status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is prompted in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in a java language, and a kernel library of Android.

The application layer and the application framework layer are run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, an OpenGL ES), and a 2D graphics engine (for example, an SGL).

The surface manager is configured to manage a display subsystem, and provide fusion of 2D and 3D layers for a plurality of applications.

The media library supports playback and recording in a plurality of commonly used audio and video formats, static image files, and the like. The media library may support a plurality of audio and video encoding formats, for example, MPEG4, H.264, moving picture experts group audio layer 3 (moving picture experts group audio layer III, MP3), advanced audio coding (advanced audio coding, AAC), adaptive multi rate (adaptive multi rate, AMR), joint photographic experts group (joint photographic experts group, JPEG), and portable network graphics (portable network graphics, PNG).

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

First, an application scenario of the method provided in embodiments of this application is described. The method provided in embodiments of this application may be applied to a smart scenario such as a smart home scenario, a smart office scenario, a smart restaurant scenario, or a smart parking lot scenario.

### I. Smart home scenarios

In the smart home scenario, smart care may be implemented for a user who uses a smart home device.
1. In a smart care scenario for an elderly person, a smart home device used by the elderly person in a period of time may be recorded. A scenario event is generated based on a recording situation, and a linkage task associated with the scenario event is set, where the linkage task includes a linkage condition (for example, a preset value) and a linkage action (or referred to as a linkage event) (for example, sending abnormal information).

For example, the scenario event is a scenario in which the elderly person gets up at night to urinate. In daily life, the elderly person normally gets up at night (which may be a time period from 24:00 to 06:00) to urinate once a day. The smart home device used by the elderly person in the time period from 24:00 to 06:00 is monitored, and it may be determined that when the elderly person gets up at night to urinate, the elderly person may use a first smart light in a bedroom, a second smart light in a bathroom, and a smart flush toilet in the bathroom. In other words, the "getting up at night to urinate" scenario may include three first events. A 1^{st} first event is that the first smart light is turned on (also understood as that the first smart light changes from turned off to turned on), a 2^{nd} first event is that the second smart light is turned on (also understood as that the second smart light changes from turned off to turned on), and a 3^{rd} first event is that the smart flush toilet performs a flush function. If it is subsequently detected that a quantity of times the elderly person gets up at night to urinate in a day exceeds a preset value of 3, in other words, it is detected that a quantity of times the foregoing three first events occur exceeds the preset value of 3, abnormal information is sent to a terminal device to remind a first user of the terminal device that the elderly person may have a physical exception. That is, the linkage condition is that a quantity of occurrence times of the "getting up at night to urinate" scenario in a second preset time period is greater than or equal to a third preset threshold, and the linkage event is that the abnormal information is sent to the terminal device. The second preset time period herein may be understood as a time period (to be specific, from 24:00 to 06:00) for getting up at night to urinate, and the third preset threshold is 3.

For another example, the scenario event is a scenario in which an elderly person accompanies a child to school. A function performed by a smart home device or a state change of the smart home device is monitored during a process in which the elderly person normally accompanies the child to school from going out (06:00) to coming back home (07:00) in daily life. It may be determined that the scenario in which the elderly person accompanies the child to school includes two first events. A 1^{st} first event is that a smart door lock is unlocked from inside a house (which may indicate that a family member goes out), a 2^{nd} first event is that the smart door lock is unlocked from outside the house (which may indicate that a family member goes back home), and an interval between the 1^{st} first event and the 2^{nd} first event is 1 hour. If it is detected that duration that the elderly person accompanies the child to school from going out to going back home exceeds a preset value of 2 hours, in other words, it is detected that an interval between the foregoing 1^{st} first event and the foregoing 2^{nd} first event exceeds the preset value of 2 hours, abnormal information is sent to a terminal device to remind a first user of the terminal device that the elderly person may get into trouble on the way of accompanying the child to school. That is, the linkage condition is that duration of the scenario of accompanying the child to school is greater than or equal to a second preset threshold, and the linkage event is that the abnormal information is sent to the terminal device. The second preset threshold herein is 2 hours.

For another example, the scenario event is a scenario in which an elderly person makes lunch. A function performed by a smart home device or a state change of the smart home device is monitored during a process in which the elderly person makes lunch in daily life. It may be determined that the scenario that the elderly person makes lunch includes two first events. A 1^{st} first event is that a valve of a cooking gas tank changes from "closed" to "opened", a 2^{nd} first event is that the valve of the cooking gas tank changes from "opened" to "closed", and an interval between the 1^{st} first event and the 2^{nd} first event is 40 minutes. When it is detected that use duration of the cooking gas tank exceeds a preset value of 1 hour, abnormal information is sent to a terminal device to remind a first user of the terminal device that the elderly person may forget to close the valve of the cooking gas tank. That is, the linkage condition is that duration of the scenario in which the elderly person makes lunch is greater than or equal to a second preset threshold, and the linkage event is that the abnormal information is sent to the terminal device. The second preset threshold herein is 1 hour.

### 2. Smart care scenario for a user who is accustomed to drinking

For example, a scenario event is a drinking scenario. It is detected that beer in a smart refrigerator is reduced by 1 bottle from 19:00 to 20:00 (for example, a husband is accustomed to taking one bottle of beer from the smart refrigerator at dinner in daily life), and it may be determined that the drinking scenario includes one first event, and the first event is that a quantity of beer in the smart refrigerator is reduced by 1 bottle. If it is detected that the quantity of beer in the smart refrigerator is reduced by 4 bottles from 19:00 to 20:00 on a day, abnormal information is sent to a terminal device. For monitoring the quantity of beer, a reduction of the quantity of beer may be detected by using a light sensor, a gravity sensor, a camera, or the like in the smart refrigerator. Remind a first user (such as a wife) of the terminal device that a mood of the husband may fluctuate. That is, the linkage condition is that a quantity of occurrence times of the drinking scenario in a second preset time period is greater than or equal to a third preset threshold, and the linkage event is that the abnormal information is sent to the terminal device. The second preset time period herein may be understood as 1 hour (to be specific, 19:00 to 20:00), and the third preset threshold is 4.

### 3. Smart care scenario for a pet

For example, the scenario event is a pet eating scenario. It is detected that an automatic feeder is enabled every 5 hours in daily life (in other words, a pet eats every 5 hours in daily life), and it may be determined that the pet eating scenario includes two first events. A 1^{st} first event is that the automatic feeder enables a feeding function, a 2^{nd} first event is that the automatic feeder enables the feeding function, and an interval between the 1^{st} first event and the 2^{nd} first event is 5 hours. If it is subsequently detected that the interval between the 1^{st} first event and the 2^{nd} first event is 8 hours (in other words, the pet has not eaten for more than 8 hours), abnormal information is sent to a terminal device to remind a first user of the terminal device (such as a pet owner) that the pet has a physical or emotional exception. That is, the linkage condition is that duration of the pet eating scenario is greater than or equal to a second preset threshold, and the linkage event is that the abnormal information is sent to the terminal device. The second preset threshold herein is 7 hours.

It may be understood that, for the smart home scenario, the foregoing several types are merely examples. In actual application, there may be another specific scenario. This is not limited herein.

### II. Smart office scenarios

For example, the scenario event is a clock-in scenario. It is detected that a smart punch clock performs clocking in on a second user (an employee A) from 07:00 to 08:00 on a working day, and it may be determined that the clock-in scenario includes one first event. The first event is that the smart punch clock performs clocking in on the second user. If it is detected that a quantity of occurrence times of the first event in a week (in other words, five working days) is 1, abnormal information is sent to a terminal device to remind a first user of the terminal device (for example, a leader or a human resource person) that the employee A has a physical or emotional exception. That is, the linkage condition is that a quantity of times the employee A clocks in in a week is less than a threshold, and the linkage event is that the abnormal information is sent to the terminal device. The threshold herein may be 4.

### III. Smart restaurant scenarios

For example, the scenario event is the smart restaurant scenario. It is detected that a customer A orders food on a mini program of a smart restaurant at breakfast in daily life, and it may be determined that the smart restaurant scenario includes one first event. The first event is that the customer A orders food on the mini program of the smart restaurant. If it is detected that a quantity of occurrence times of the first event in one week (in other words, five working days) is 0, information is sent to a terminal device. The information is used to show care of the smart restaurant for a first user (such as the customer A) of the terminal device. For example, the information is: It is detected that you have not arrived at the restaurant for breakfast this week. Are you moving house or on a business trip? In this way, smart care of the smart restaurant for the customer A is shown. That is, the linkage condition is that a quantity of times the customer A orders breakfast on the mini program in one week is less than a threshold, and the linkage event is that the abnormal information is sent to the terminal device. The threshold herein may be 3.

### IV. Smart parking lot scenarios

For example, the scenario event is a smart parking lot scenario. It is detected that a vehicle with a license plate Guangdong A666666 (for example, a car owner is a wife) parks in a parking lot from 19:00 p.m. to 07:00 a.m. in daily life, and it may be determined that the smart parking lot scenario includes two first events. A 1^{st} first event is that the vehicle enters the parking lot, a 2^{nd} first event is that the vehicle leaves the parking lot, and an interval between the 1^{st} first event and the 2^{nd} first event is 12 hours. If it is subsequently detected that the interval between the 1^{st} first event and the 2^{nd} first event is 24 hours (in other words, the vehicle parks in the parking lot for more than 24 hours), abnormal information is sent to a terminal device to remind a first user (such as a husband) of the terminal device that the wife may not go to work normally and may have a physical or emotional exception. That is, the linkage condition is that duration of the smart parking lot scenario is greater than or equal to a second preset threshold, and the linkage event is that the abnormal information is sent to the terminal device. The second preset threshold herein may be 10 hours.

It may be understood that, for application scenarios of the method provided in this embodiment of this application, the foregoing several scenarios are merely examples. In actual application, there may be another scenario. This is not specifically limited herein.

The following describes in detail an event processing method in embodiments of this application with reference to the smart home system in FIG. 1.

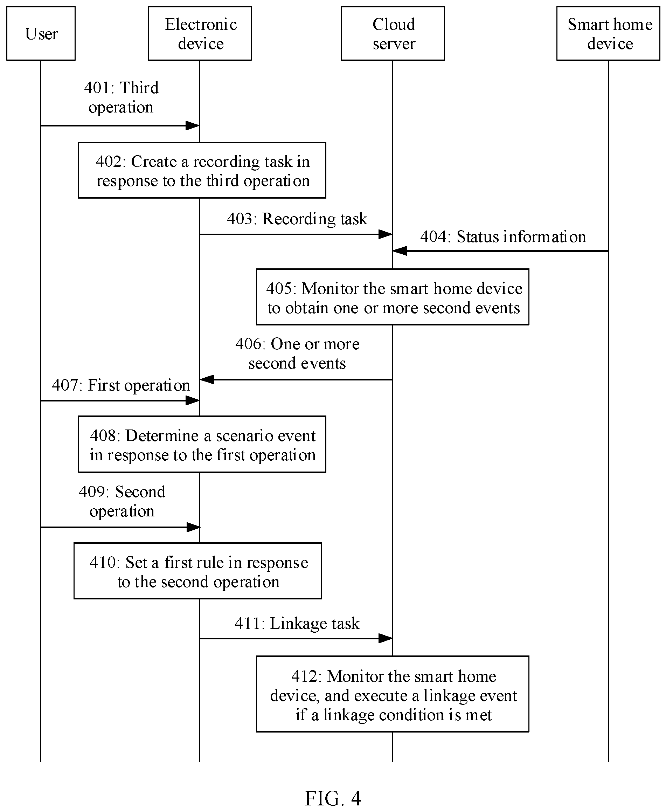

Refer to FIG. 4. An embodiment of the event processing method in embodiments of this application includes step 401 to step 412.

Step 401: An electronic device receives a third operation.

The third operation in this embodiment of this application may be an operation (tapping, a voice, filling in, or the like) of a first user, or may be an instruction operation delivered by another device (for example, a server or another electronic device), or the like. This is not specifically limited herein.

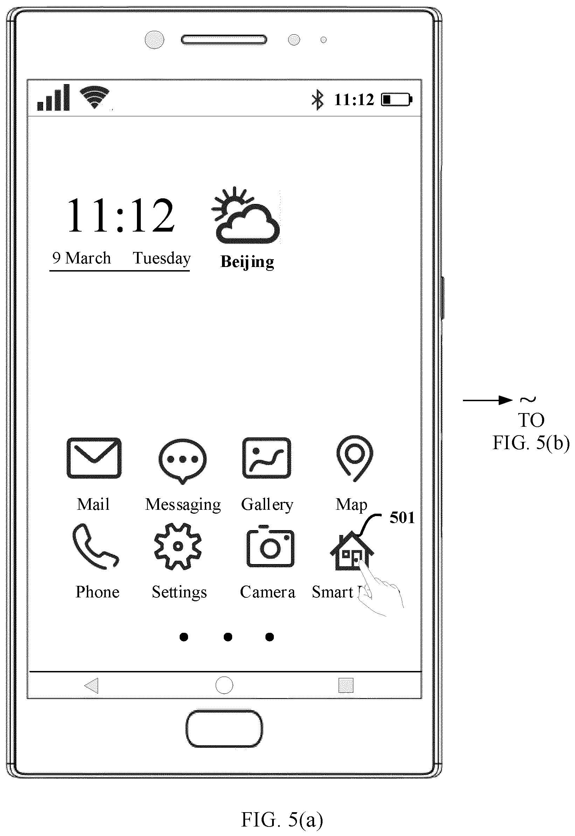

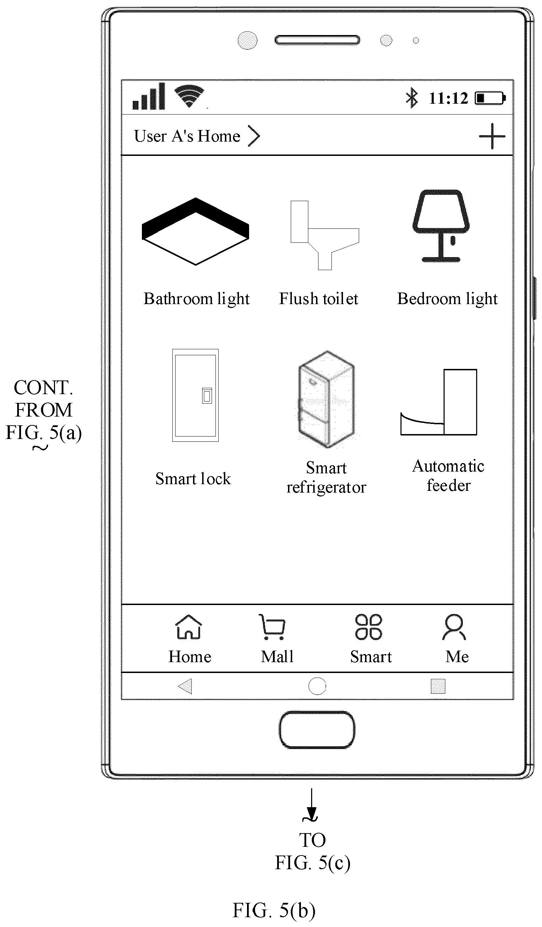

For example, only an example in which the electronic device is a mobile phone and the third operation is the operation of the first user is used for description. FIG. 5(a) is a schematic diagram of a front view of the mobile phone. An icon 501 of a smart home App is displayed on a display screen of the mobile phone, and the first user may tap the icon 501 of the smart home App. As shown in FIG. 5(b), the mobile phone displays a user interface of the smart home App in response to the tap operation. The user interface may include a name and an icon of an added smart home device, a plurality of status bars, and the like. For example, the added smart home device includes: a bathroom light, a flush toilet, a bedroom light, a smart door lock, a smart refrigerator, an automatic feeder, and the like. The plurality of status bars include: "Home", "Mall", "Smart", and "Me". If the first user has not logged in to the smart home APP, the first user further needs to enter a user name and a password. The user name may be a mobile phone number, a WeChat ID, a specific name, or the like of the first user. The password may be a fingerprint password, a digital password, a pattern password, a voice password, a face password, or the like. This is not specifically limited herein. After the first user logs in to the smart home APP, the user interface may further include the user name. For example, as shown in FIG. 5(b), the user name may be A. Optionally, as shown in FIG. 5(b), the first user may alternatively tap a "+" icon on the user interface to add a smart home device.

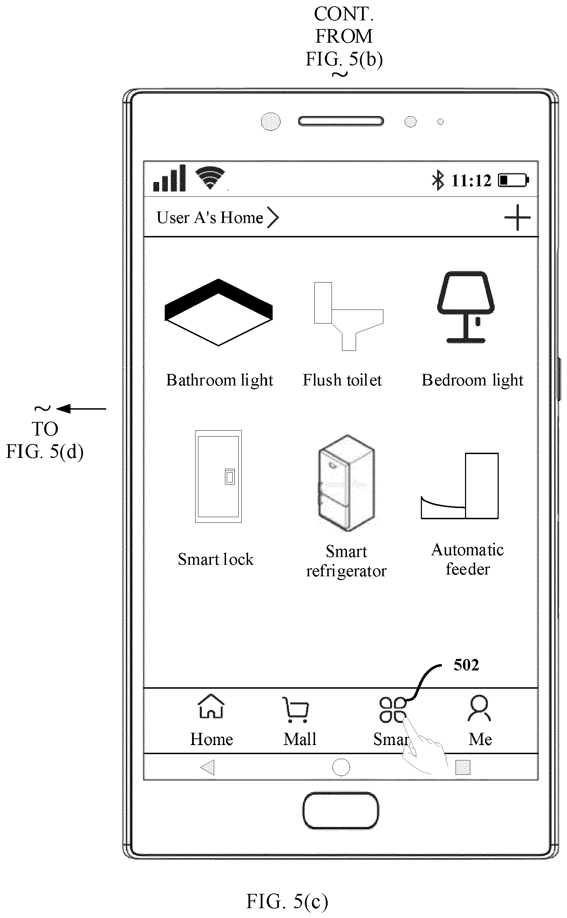

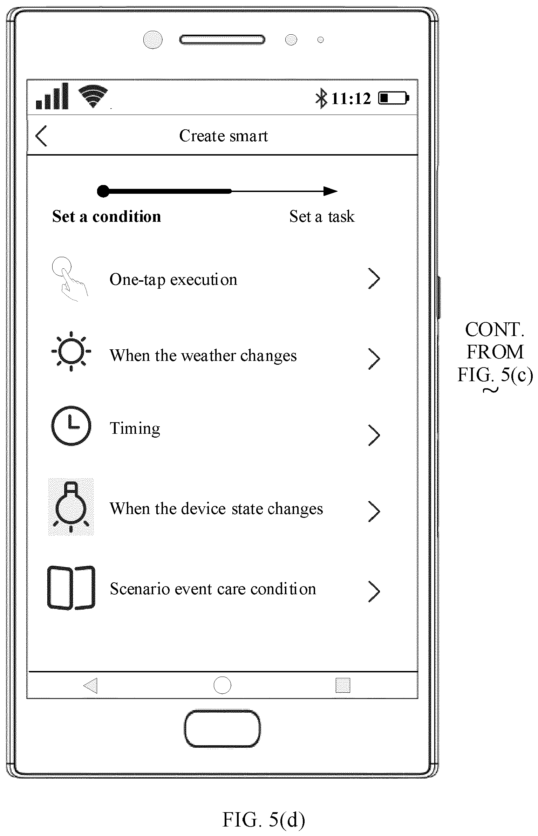

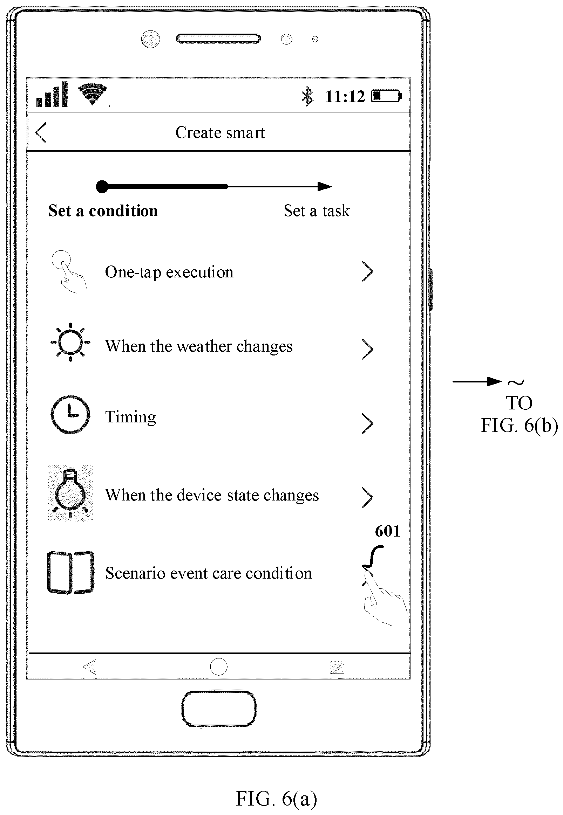

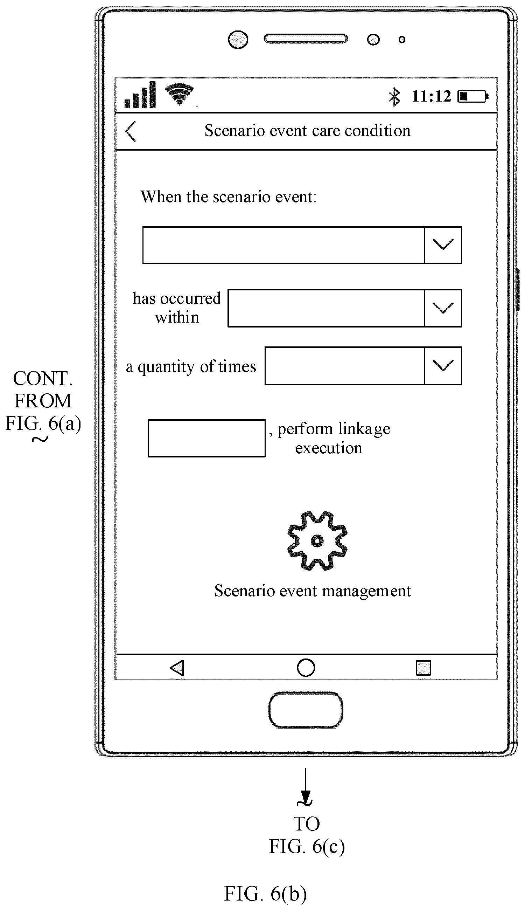

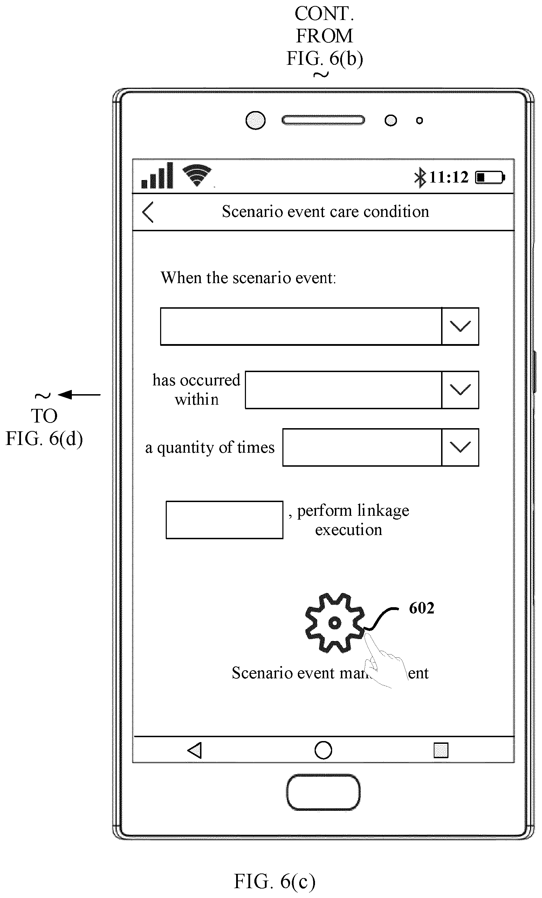

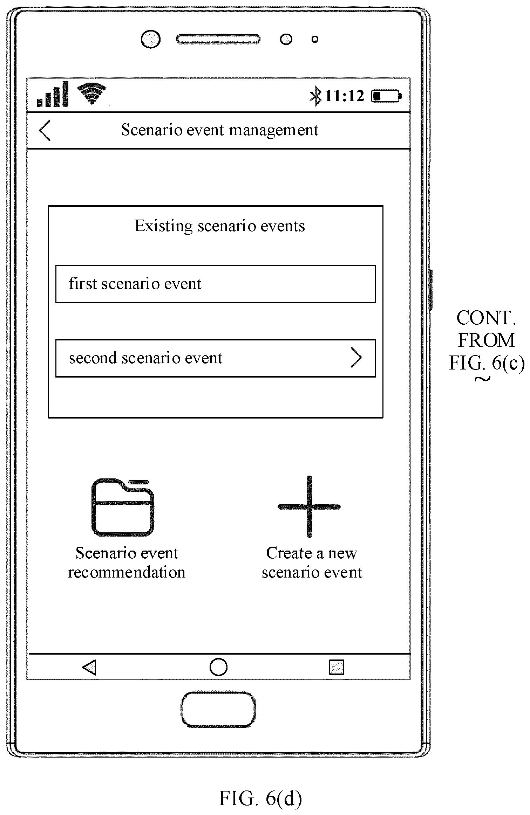

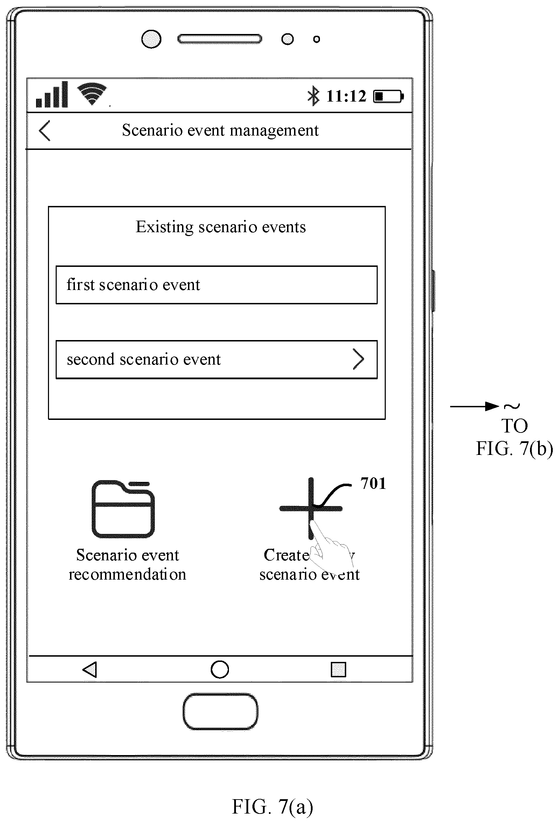

In addition, as shown in FIG. 5(c), the first user may alternatively tap a "Smart" icon 502 in the status bar. As shown in FIG. 5(d), the mobile phone displays a user interface of "Create smart" in response to the tap operation. The user interface may include two parts: "Set a condition" and "Set a task". As shown in FIG. 5(d), the first user may tap the "Smart" icon 502 to jump to an interface of "Set a condition" by default. The interface of "Set a condition" includes the following: "One-tap execution", "When the weather changes", "Timing", "When the device state changes", "Scenario event care condition", and the like. As shown in FIG. 6(a), the first user may further tap a ">" icon 601 on the right of "Scenario event care condition". As shown in FIG. 6(b), the mobile phone displays a user interface of "Scenario event care condition" in response to the tap operation. The interface of "Scenario event care condition" includes a linkage condition (which is described in detail below) and "Scenario event management". As shown in FIG. 6(c), the first user may further tap a "Scenario event management" icon 602. As shown in FIG. 6(d), the mobile phone displays a user interface of "Scenario event management" in response to the tap operation. The interface of "Scenario event management" may include "Existing scenario events", "Scenario event recommendation", "Create a new scenario event" (or "Create a recording task"), and the like. Existing scenario events include a first scenario event, a second scenario event, and the like. Specific scenarios of the first scenario event and second scenario event and a specific quantity of smart scenarios are not limited herein. For example, the first scenario event or the second scenario event may be an "accompanying a child to school" scenario, a "cooking" scenario, a "dinner" scenario, a "pet feeding" scenario, and the like (as described above). "Scenario event recommendation" is used to recommend, to the first user, a smart scenario that has been selected by another user, and the like. "Create a new scenario event" is used by the first user to create a new smart scenario. As shown in FIG. 7(a), a "Create a new scenario event" icon is displayed on the display screen of the mobile phone, and the first user may tap the "Create a new scenario event" icon 701. In other words, the third operation may include the operation that the first user taps the "Create a new scenario event" icon 701.

Step 402: The electronic device creates the recording task in response to the third operation.

The recording task in this embodiment of this application includes a scenario event name, a recording time range, and the like.

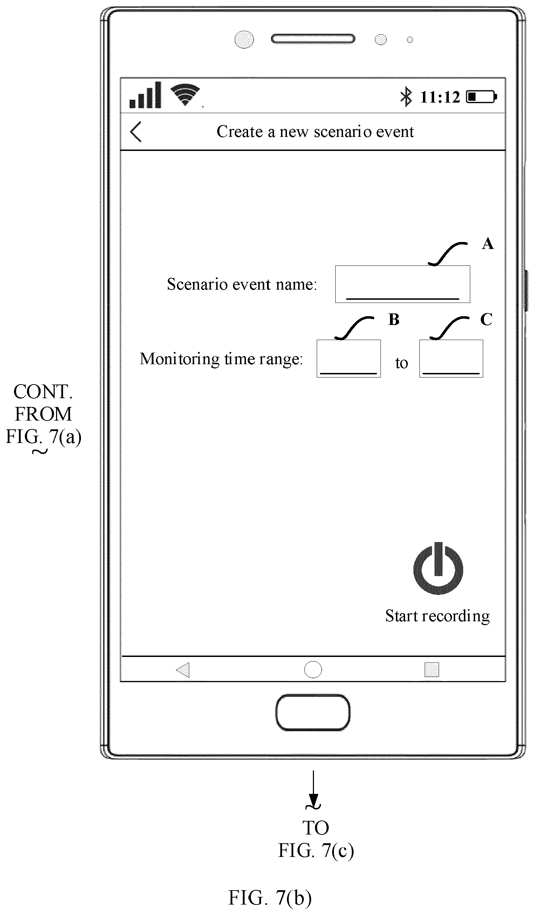

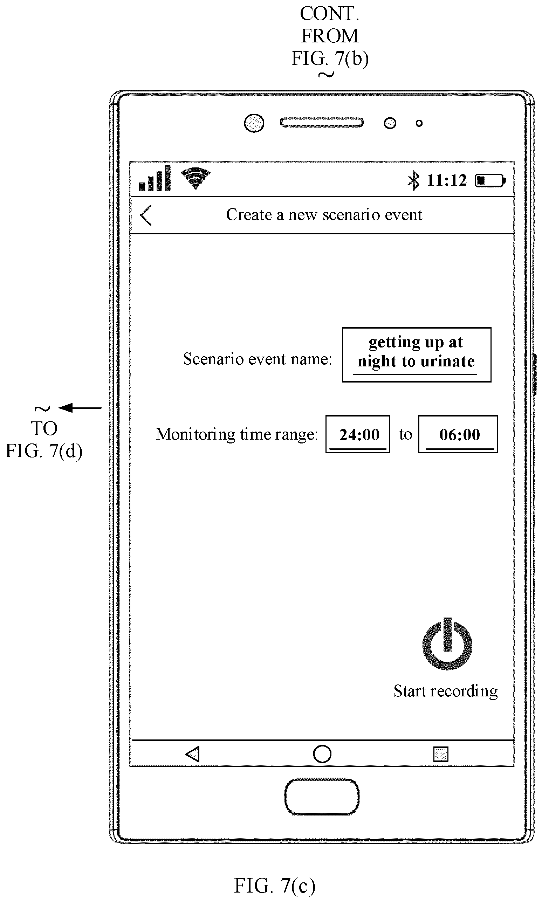

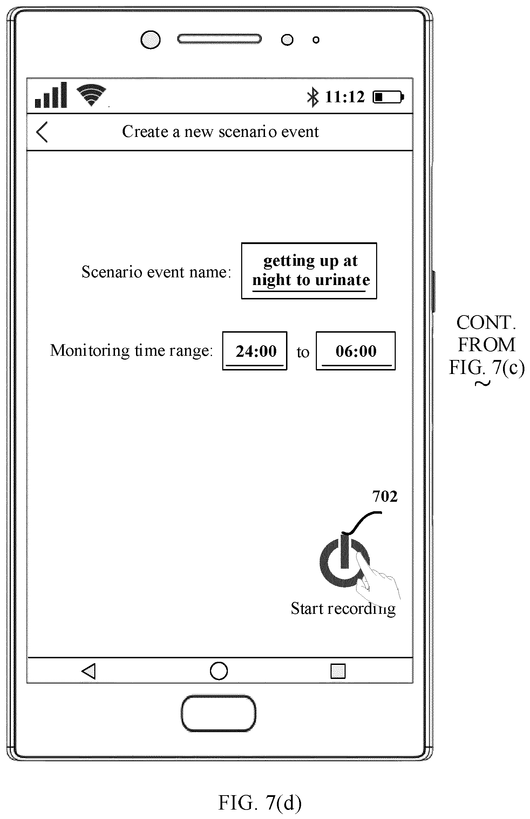

For example, the foregoing example is still used. As shown in FIG. 7(b), the mobile phone displays a user interface of "Create a new scenario event" in response to the tap operation. The user interface may include "Scenario event name", an area A, "Monitoring time range" (that is, a first preset time period), an area B, an area C, "Start recording", and the like. The first user may fill in a scenario event name in the area A, fill in a start moment of a monitoring time range in the area B, and fill in an end moment of the monitoring time range in the area C. For example, to monitor a quantity of times a second user (for example, an elderly person or a child) gets up at night to urinate, the first user may fill in "getting up at night to urinate" in the area A, fill in "24:00" in the area B, and fill in "06:00" in the area C. As shown in FIG. 7(c), the mobile phone displays, in response to the filling operation, the interface of "Create a new scenario event" that has been filled by the first user. If the first user confirms that there is no problem, the first user may tap a "Start recording" icon 702 shown in FIG. 7(d).

In this embodiment of this application, the first user and the second user may be a same user, or may be different users (for example, the first user and the second user are in a father-daughter relationship). This is not specifically limited herein.

Step 403: The electronic device sends the recording task to a cloud server. This step is optional.

In this step, the electronic device sends the recording task to the cloud server, which may mean that the electronic device forwards the recording task to the cloud server by using a home hub, or may mean that the electronic device directly sends the recording task to the cloud server, or the like. This is not specifically limited herein.

Optionally, after the electronic device creates the recording task, if a home hub shown in FIG. 1 exists in a smart home system, the electronic device may send the recording task to the home hub, and the home hub stores and executes the recording task. The electronic device may further send the recording task to the cloud server, and the cloud server may store the recording task, to prevent a loss of local data (including the recording task) of the home hub. If there is no home hub in the smart home system, the electronic device may store and execute the recording task. Alternatively, the recording task is sent to the cloud server, and the cloud server stores and executes the recording task. Optionally, if the cloud server stores the recording task, to avoid leakage of private information of a user, information related to privacy of the first user and/or the second user may not be stored, such as a real name, an identity card number, or a mobile phone number of the user. Certainly, an identifier or a nickname may be used to replace the private information of the user.

Step 404: The cloud server receives status information sent by the smart home device. This step is optional.

An execution body of this step may alternatively be a device such as the electronic device or the home hub. This is not specifically limited herein.

Optionally, after receiving the recording task, the cloud server records one or more second events triggered within the monitoring time range. The second event may be an action/a function performed by the smart home device, or may be that a state of the smart home device changes from a state to another state. For example, in the example of the foregoing scenario, the second event may be that a smart light in a bathroom performs a turn-on function, or the smart light changes from an off state to an on state.

In other words, the cloud server starts recording at the start moment of the monitoring time range, and at the end moment of the monitoring time range, the cloud server ends recording and records one or more second events that occur at the start moment and the end moment.

If the cloud server executes the recording task, the cloud server may receive, within the monitoring time range, status information sent by all smart home devices (such as all smart home devices under an account of a user A's home in FIG. 5(b)). In other words, the smart home device notifies the cloud server of a state change that occurs within the monitoring time range. Certainly, the smart home device may notify the cloud server of a function or an action performed within the monitoring time range.

For example, the foregoing example is still used. The scenario event name of the recording task is "getting up at night to urinate", and the monitoring time range is from 24:00 to 06:00.

Step 405: The cloud server monitors the smart home device to obtain one or more second events. This step is optional.

An execution body of this step may alternatively be a device such as the electronic device or the home hub. This is not specifically limited herein.

Optionally, the cloud server may record, within the monitoring time range, functions executed by all smart home devices or state changes that the all smart home devices occur, to obtain the one or more second events. In addition, first information of the second event may be further recorded, and the first information may include a four-tuple of the second event and a time interval between at least two second events. Certainly, if there are a plurality of second users in a home, the first information may further include a specific user in the plurality of second users who use the smart home device. The four-tuple includes the smart home device name {or a service (Service) name}, a character (Character) of the smart home device, an execution action (Action), and a location (Location) at home. A time interval is an interval between the at least two second events. In addition, the time interval may include at least one of a time interval (Delay) that actually occurs between the at least two second events, a preset time interval {or referred to as a default time interval (Tolerance)}, and the like. A unit of the time interval may be second, minute, hour, or the like. This is not specifically limited herein. When the unit is not described in this embodiment of this application, the unit is minute by default, other than a unit that is especially described. The cloud server uses four-tuples and/or time intervals of the one or more second events as a whole as the scenario event. Certainly, if there are the plurality of second events, the scenario event may be generated based on a sequence of occurrence time of the plurality of second events.

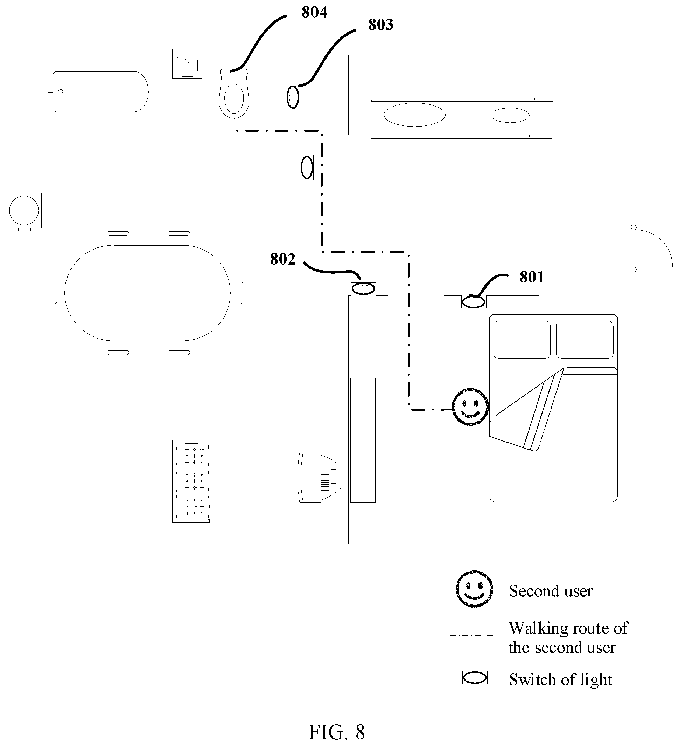

For example, the foregoing example is still used. Within the monitoring time range from 24:00 to 06:00, a total of four smart home devices perform actions or functions (equivalent to four second events). For ease of understanding, the following describes generation of the "getting up at night to urinate" scenario event with reference to a room structure of a home, and an example of the home structure is shown in FIG. 8. A walking route of the second user within the monitoring time range from 24:00 to 06:00 is shown in FIG. 8, where the second user gets up from the bedroom and walks through a living room to the flush toilet in the bathroom. 801 is a switch of the bedroom light, 802 is a switch of a living room light, 803 is a switch of the bathroom light, and 804 is a flusher of the flush toilet in the bathroom. For example, the second user is an elderly person, a 1^{st} second event is that the switch of the bedroom light performs a turn-on function, a 2^{nd} second event is that the switch of the living room light performs the turn-on function, a 3^{rd} second event is that the switch of the bathroom light performs the turn-on function, and a 4^{th} second event is that the flusher of the flush toilet in the bathroom performs flushing. Delay represents an actual interval between two adjacent second events. As shown in Table 1, an actual interval between the 1^{st} second event and the 2^{nd} second event is 5 seconds, an actual interval between the 2^{nd} second event and the 3^{rd} second event is 5 seconds, and an actual interval between the 3^{rd} second event and the 4^{th} second event is 5 minutes. That the actual interval between the 3^{rd} second event and the 4^{th} second event is 5 minutes may be understood as that the flusher of the flush toilet flushes 5 minutes after the elderly person turns on the switch of the bathroom light. Tolerance represents a time interval between events that are preset or subsequently set by the user. If the time interval is preset, it may further be understood as that the tolerance is a default value of the time interval. If the time interval is subsequently set, it may be understood as that the tolerance is an adjustment value of the time interval. Optionally, the light may alternatively be turned on/off automatically after a sensor device such as an infrared sensor senses that a person is nearby; and alternatively, the flush toilet may automatically flush after the user uses the toilet which is sensed by the sensor device such as an infrared sensor.

For example, the plurality of second events that are obtained by the cloud server by monitoring the smart home device, and the first information may be shown in Table 1.

**Table 1**

| Service | Character | Action | Location | Delay | Tolerance |
|---|---|---|---|---|---|
| Light | Switch | Turn on | Bedroom | - | - |
| Light | Switch | Turn on | Living room | 5 seconds | 3 seconds |
| Light | Switch | Turn on | Bathroom | 5 seconds | 3 seconds |
| Flush toilet | Flusher | Flush | Bathroom | 5 minutes | 10 minutes |

A specified value of the tolerance is not specifically limited herein.

Optionally, after obtaining the one or more second events by monitoring the smart home device, the cloud device may learn of, based on an auxiliary device, a user who uses the smart device, and generate a scenario event related to the user. For example, the scenario event may include four second events in Table 1.

Optionally, if there are a plurality of second users using the smart device, and the first user wants to care for only a specific user in the plurality of second users, a smart device used by the specific user may be identified by using the auxiliary device.

The auxiliary device in this embodiment of this application may identify the specific user in a manner such as a sensor, facial recognition, or fingerprint recognition. A specific identification method is not limited herein.

For example, the plurality of second events that are obtained by the cloud server by monitoring the smart home device, and the first information may alternatively be shown in Table 2.

**Table 2**

| Service | Character | Action | Location | Delay | Tolerance | User |
|---|---|---|---|---|---|---|
| Light | Switch | Turn on | Bedroom | - | - | Specific user |
| Light | Switch | Turn on | Living room | 5 seconds | 3 seconds | Non-specific user |
| Light | Switch | Turn on | Bathroom | 5 seconds | 3 seconds | Specific user |
| Flush toilet | Flusher | Flush | Bathroom | 5 minutes | 10 minutes | Specific user |

Compared with the first information shown in Table 1, the first information shown in Table 2 further includes user information (a user column in Table 2). The user information is identity information of the user who uses the smart device, and may be obtained through recognition by the foregoing auxiliary device. For example, when a smart door lock is unlocked, an identity authentication apparatus (for example, a facial recognition apparatus or a fingerprint recognition apparatus) in the smart door lock identifies, based on collected image information, fingerprint information, and the like, that a user of the smart door lock in the smart door lock unlocking event is an elderly person, so that the smart door lock sends the smart door lock unlocking event and user information (the elderly person) corresponding to the smart door lock unlocking event to the cloud device. For another example, when a smart light is turned on, a camera at home identifies, based on collected video information, that a user of the smart light in the smart light turn-on event is an elderly person, so that the smart light sends the turn-on event to the cloud device, the camera sends user information (the elderly person) to the cloud device, and the cloud device obtains the smart light turn-on event and the user information corresponding to the smart light turn-on event.

For example, in the four second events shown in Table 2, the users corresponding to the 1^{st}, the 3^{rd}, and the 4^{th} second events are all specific users, for example, an elderly person. The user corresponding to the 2^{nd} second event is a non-specific user, for example, a father. Within a monitoring time range (to be specific, from 24:00 to 06:00), although the living room light performs the turn-on function, the living room light is used by the non-specific user. In this case, the cloud device may automatically delete a second event corresponding to the non-specific user, to obtain the scenario event corresponding to the specific user shown in Table 3. Therefore, the first user does not need to manually delete a detected second event that is irrelevant to the scenario event.

For example, a schematic diagram of a structure of the "getting up at night to urinate" scenario event may be shown in Table 3.

**Table 3**

| Service | Character | Action | Location | Delay | Tolerance | User |
|---|---|---|---|---|---|---|
| Light | Switch | Turn on | Bedroom | - | - | Specific user |
| Light | Switch | Turn on | Bathroom | 10 seconds | 6 seconds | Specific user |
| Flush toilet | Flusher | Flush | Bathroom | 5 minutes | 10 minutes | Specific user |

Compared with the four second events in Table 2, three first events included in a scenario event in Table 3 are reduced by one second event, to be specific, the 2^{nd} second event in Table 2 is reduced. Correspondingly, a time interval between a 1^{st} first event and a 2^{nd} first event in Table 3 is equivalent to a time interval between the 1^{st} second event and the 3^{rd} second event in Table 2. That is, when the second event is deleted, the cloud device may automatically adjust a delay value and a tolerance value. Specifically, a delay of the 3^{rd} second event (the bathroom light is turned on) in Table 2 records a time interval between the 3^{rd} second event (the bathroom light is turned on) and the 2^{nd} second event (the living room light is turned on). Because the user corresponding to the 2^{nd} second event (the living room light is turned on) is the non-specific user, after the event that the living room light is turned on is deleted from Table 3, correspondingly, the delay of the 2^{nd} first event (the bathroom light is turned on) in Table 3 need to be adjusted to a time interval between the 2^{nd} first event (the bathroom light is turned on) and the l^{st} first event (the bedroom light is turned on) and need to be adjusted to 10 seconds, as shown in Table 3.

Step 406: The cloud server sends, to the electronic device, the one or more second events that are obtained by monitoring. This step is optional.

Optionally, after recording the smart home device to obtain the one or more second events, the cloud server sends, to the electronic device, the one or more second events that the cloud server obtains by monitoring. If the home hub is included in the smart home system, the cloud server may further send, to the electronic device by using the home hub, the one or more second events that the cloud server obtains through monitoring.

Certainly, in addition to the foregoing manner in which the electronic device obtains the second event, the electronic device may alternatively directly record status information of the smart home device to obtain the second event (in other words, the second event may be obtained without using the cloud server or the home hub). This is not specifically limited herein.

Optionally, in step 405, if the cloud server obtains the scenario event (for example, the "getting up at night to urinate" scenario event shown in Table 3), the cloud server may directly send the scenario event to the electronic device.

Step 407: The electronic device receives a first operation. This step is optional.

Optionally, after obtaining the one or more second events through monitoring, the cloud server may send, to the smart home App, the one or more second events that are obtained through monitoring. The electronic device may present the one or more second events to the first user, that is, the first user may view, by using the smart home App, the one or more second events that the cloud server obtains through monitoring.

Optionally, after obtaining the scenario event through monitoring, the cloud server may send, to the smart home App, the scenario event that is obtained through monitoring. The electronic device may present the scenario event to the first user, that is, the first user may view, by using the smart home App, the scenario event that the cloud server obtains through monitoring.

The first operation in this embodiment of this application may be a delete operation or an add operation, a tap operation, a fill operation, or an edit operation of the first user. Alternatively, the first operation may be the instruction operation delivered by another device (for example, a server or another electronic device). This is not specifically limited herein.

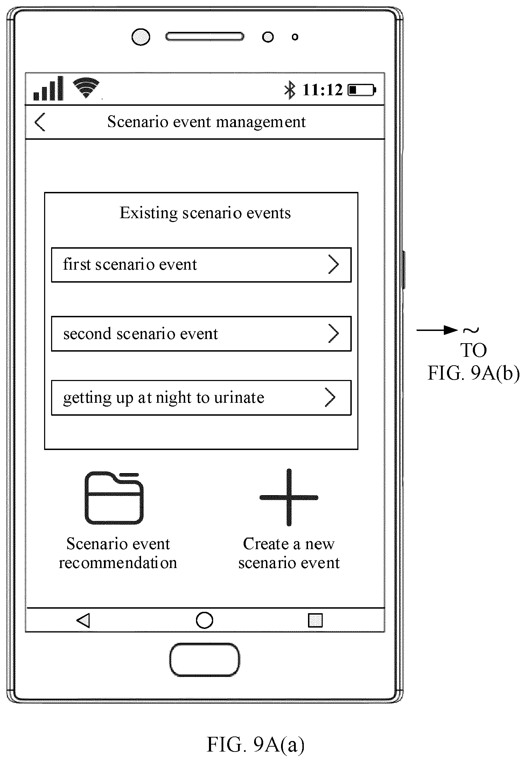

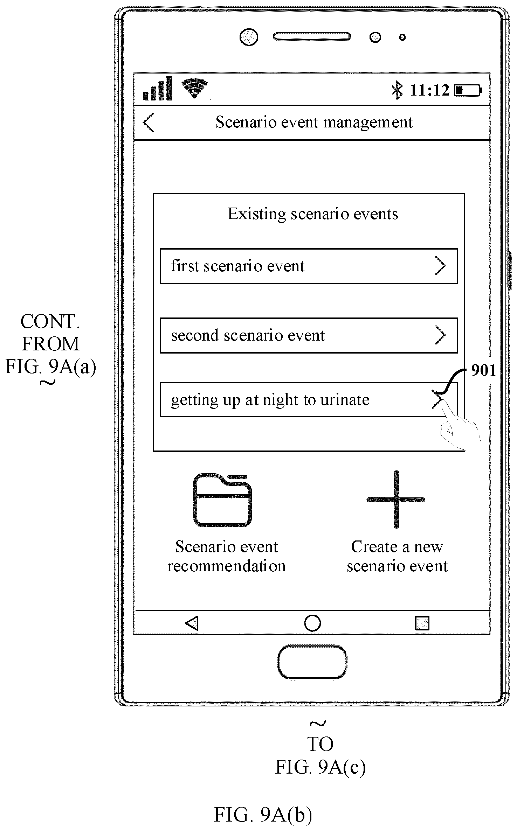

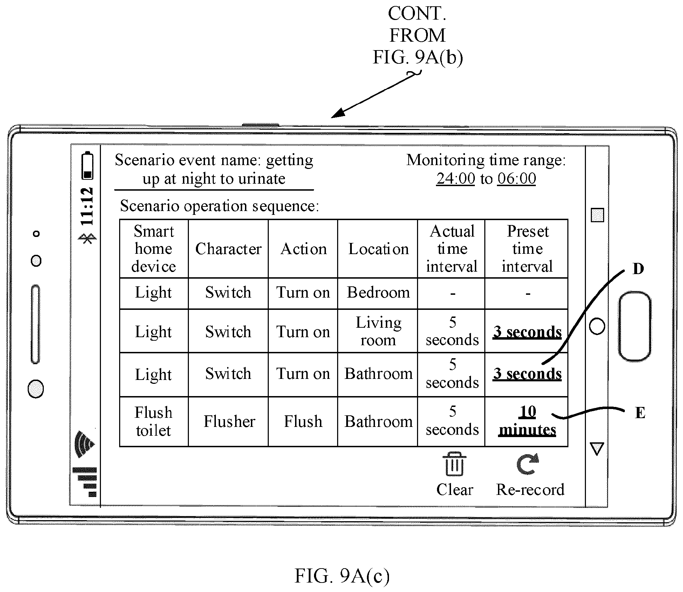

For example, after the new scenario event is created on the interface in FIG. 6(d), the interface may be refreshed or the smart home App may be restarted. As shown in FIG. 9A(a), a latest interface of "Scenario event management" is displayed on the display screen of the mobile phone. A "getting up at night to urinate" scenario that is newly created by the first user has already been in the existing scenario events. As shown in FIG. 9A(b), the first user may tap a ">" icon 901. As shown in FIG. 9A(c), the mobile phone displays a parameter interface of the "getting up at night to urinate" scenario in response to the tap operation. The parameter interface includes "Scenario event name", "Monitoring time range", "Scenario operation sequence", "Clear", "Re-record", and the like. A scenario operation sequence is similar to that in Table 1. In addition, the first user may tap "Scenario operation sequence" to delete or add the plurality of second events, and may further adjust preset time intervals in an area D and an area E in the scenario operation sequence. In other words, the first operation may include that the first user taps, deletes, or adds the second event in the scenario operation sequence, and may further include that the first user taps, fills in, and edits the area D or the area E. For example, in the scenario operation sequence shown in FIG. 9A(c), the first user considers that a turn-on action of the light in the living room is not related to the "getting up at night to urinate" scenario event, in other words, the first user considers that the turn-on action of the light in the living room in the "getting up at night to urinate" scenario event (for example, the turn-on action of the light in the living room may be triggered by another family member who watches television in the living room) is not necessary. Alternatively, the first user learns, based on the foregoing auxiliary device, that the light in the living room is used by the non-specific user (for example, a father, a mother, or a child). In this case, the first user may perform the first operation to delete the turn-on action of the light in the living room in the scenario operation sequence shown in FIG. 9A(c), so as to obtain a scenario event of the specific user (for example, the elderly person). For another example, the first user considers that the preset time interval of 5 minutes shown in the area E in the scenario operation sequence shown in FIG. 9A(c) is too short, in other words, the first user considers that the elderly person may go to the toilet for a longer time. In this case, the first user may perform the first operation to modify the 5 minutes in the area E to 10 minutes.

Optionally, through step 407, the first user may perform customized modification and personalized configuration on a scenario operation sequence that is obtained by recording. For example, the first user deletes, adds, or edits the one or more second events or first information of the one or more second events. Therefore, when a second event that is not related to the scenario event and that is unnecessary is recorded within the monitoring event range of the scenario event, the first user may manually delete the second event that is not related and that is unnecessary, so that a scenario event determined in step 408 is closer to a real scenario event.

Step 408: The electronic device determines the scenario event in response to the first operation. This step is optional.

Optionally, after the electronic device receives the first operation, the electronic device adjusts, in response to the first operation, the first information of the one or more second events that are obtained through monitoring, to obtain one or more first events, and determines that the scenario event includes the one or more first events. In other words, the electronic device may determine, based on selection of the first user, that the scenario event includes one or more first events of the one or more second events. A quantity of first events is less than or equal to a quantity of second events.

Optionally, after the electronic device receives the first operation, the electronic device adjusts the scenario event in response to the first operation.

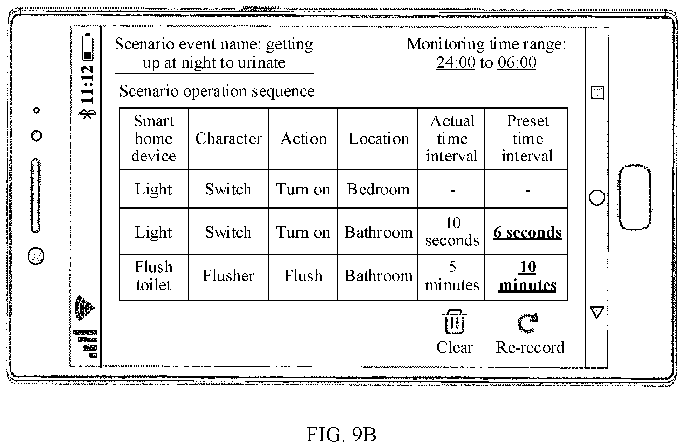

For example, the foregoing example is still used. As shown in FIG. 9A(c), on the parameter interface of the "getting up at night to urinate" scenario, the first user may delete the 2^{nd} second event in the scenario operation sequence, and adjust the preset time interval in the area D and/or adjust the preset time interval in the area E. In response to the tap, edit and/or fill operation of the first user, the electronic device deletes the 2^{nd} second event, adjusts the preset time interval in the area D, and/or adjusts the preset time interval in the area E. FIG. 9B shows an example of a possible modified scenario operation sequence. Compared with FIG. 9A(c), in FIG. 9B, the first user deletes the 2^{nd} second event, to be specific, the first user deletes the second event that is the turn-on action of the light in the living room in the scenario operation sequence (for example, the first user considers that turning on or turning off the light in the living room may not be a necessary item in the "getting up at night to urinate" scenario), to obtain the modified scenario operation sequence. As shown in FIG. 9B, the modified scenario operation sequence, in other words, a modified "getting up at night to urinate" scenario event, includes three first events. A l^{st} first event is that the switch of the light in the bedroom performs the turn-on function, a 2^{nd} first event is that the switch of the light in the bedroom performs the turn-on function, and a 3^{rd} first event is that the flusher of the flush toilet in the bathroom performs the flushing function. Herein, "function" may be understood as a same concept as "Action".

For example, a schematic diagram of a structure of the "getting up at night to urinate" scenario event may be shown in Table 3. Certainly, if a plurality of users use the smart home device within a monitoring time period, a second event, which is generated when another user uses the smart home device in the plurality of second events, may be deleted by the first user, or the specific user may be identified by using the foregoing auxiliary device and an event, which is triggered when the non-specific user uses the smart home device, may be deleted. In this case, impact of using the smart home device by the another user on accurately monitoring a behavior of the second user is reduced. For example, compared with the four second events in Table 2, the three first events included in the scenario event in Table 3 are reduced by one second event, to be specific, the 2^{nd} second event in Table 2.

In a possible implementation, the first user may select, from the one or more second events sent by the cloud device, the one or more first events as the scenario event. In another possible implementation, the first user may alternatively perform an adjustment operation such as deletion or addition on the first event in the scenario event sent by the cloud device. Certainly, the cloud device or the electronic device may alternatively automatically adjust the scenario event by using the auxiliary device. This is not specifically limited herein.

It may be understood that the scenario event in this embodiment of this application may be generated by the cloud device, or may be generated by the electronic device, or may be generated by a setting of the user. This is not specifically limited herein. If the scenario event is generated by the cloud device, the one or more second events that are obtained by monitoring may be used as the scenario event, or the one or more first events are obtained by performing filtration on the second event by using the auxiliary device or the setting of the first user, and that the scenario event includes the one or more first events is determined. A possible manner in which the electronic device generates the scenario event is similar to a manner in which the cloud device generates the scenario event. Details are not described herein.

Step 409: The electronic device receives a second operation.

The second operation in this embodiment of this application is similar to the foregoing third operation or the first operation, and may be the tap operation or the fill operation of the first user. Alternatively, the second operation may be an instruction operation delivered by another device (for example, a server or another electronic device). This is not specifically limited herein.

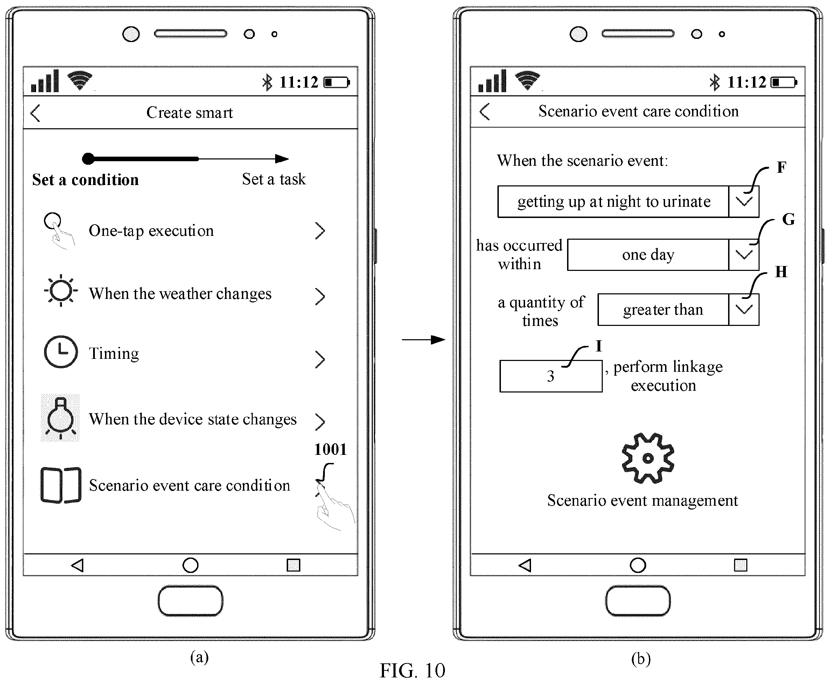

For example, the foregoing example is still used. As shown in (a) in FIG. 10, the first user may tap a ">" icon 1001 on the right of "Scenario event care condition" on an interface of "Create smart". As shown in (b) in FIG. 10, the mobile phone displays the interface of "Scenario event care condition" in response to the tap operation of the first user. The interface of "Scenario event care condition" includes "Scenario event name", an association condition associated with the scenario event, and "Scenario event management". The association condition includes an area F, an area G, an area H, an area I, and the like. The first user may select a linkage condition, which needs to be set, from a drop-down option on the right of the area F, the area G, the area H, and the area I. The "getting up at night to urinate" scenario is used as an example. As shown in (b) in FIG. 10, the linkage condition on the interface of "Scenario event care condition" is: When the "getting up at night to urinate" scenario event has occurred within "one day" a quantity of times is "greater than" "3", a linkage action is an associated IFTTT action that is bound. The first user may select another scenario event in the area F in (b) in FIG. 10, select a time area in the area G, select "greater than", "less than", "equal to", "greater than or equal to", "less than or equal to", and the like in the area H, and select a value in the area I.

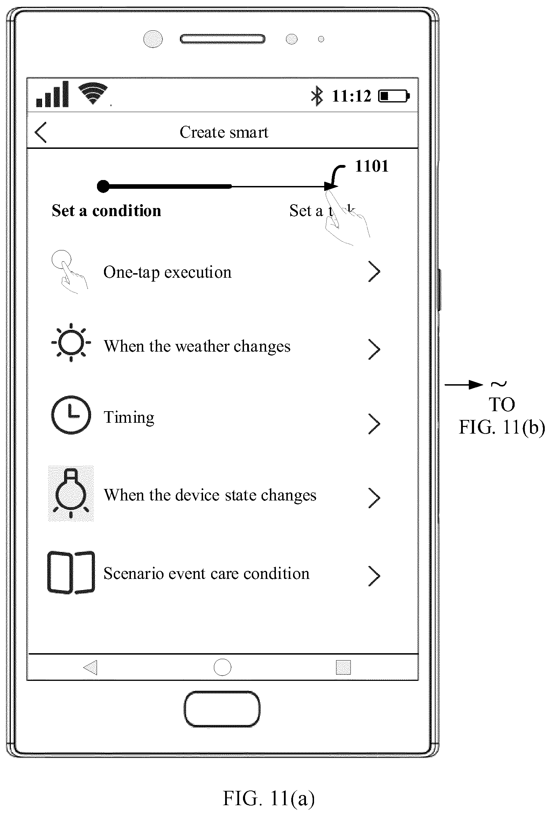

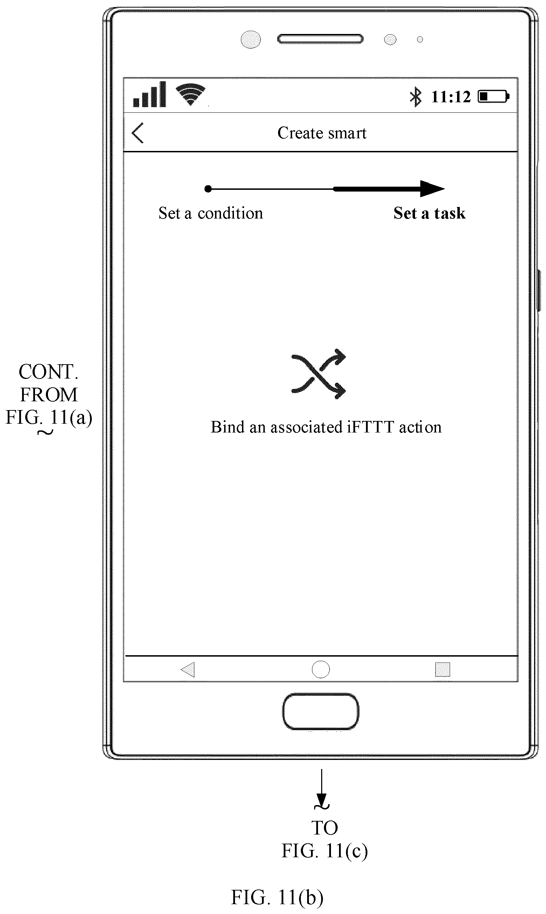

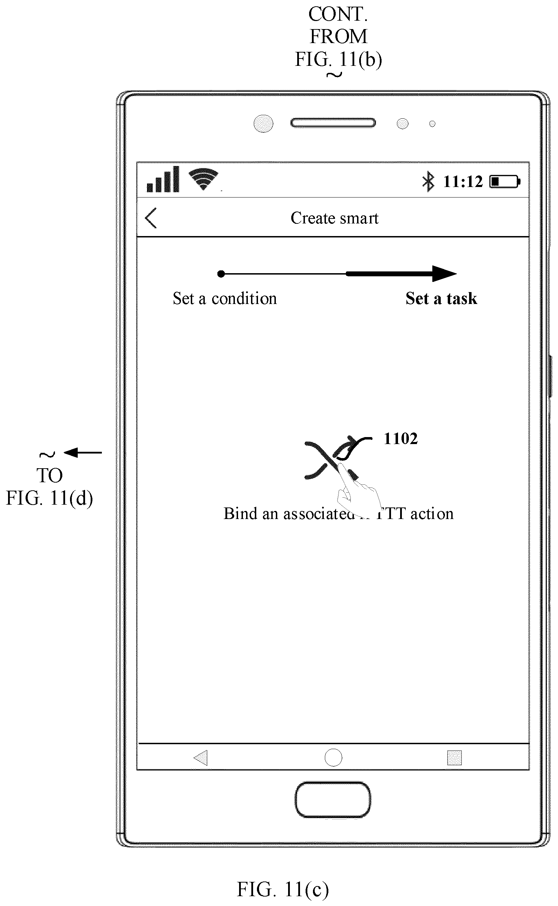

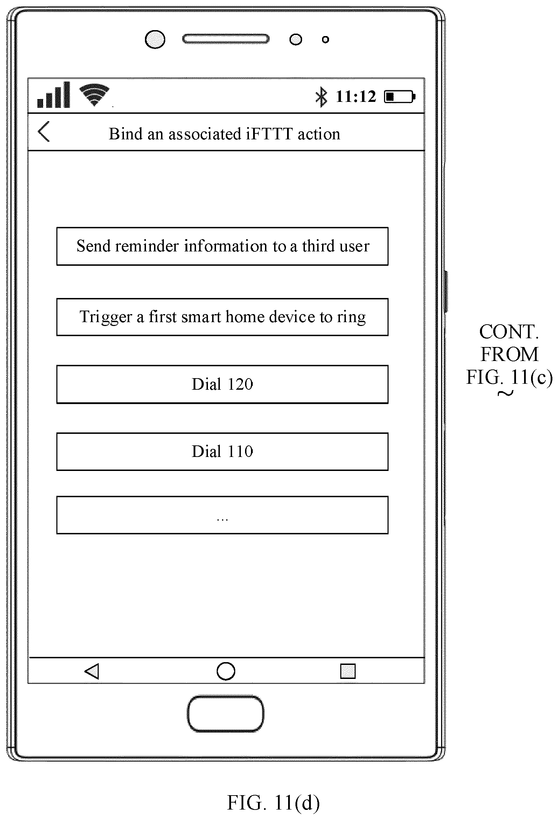

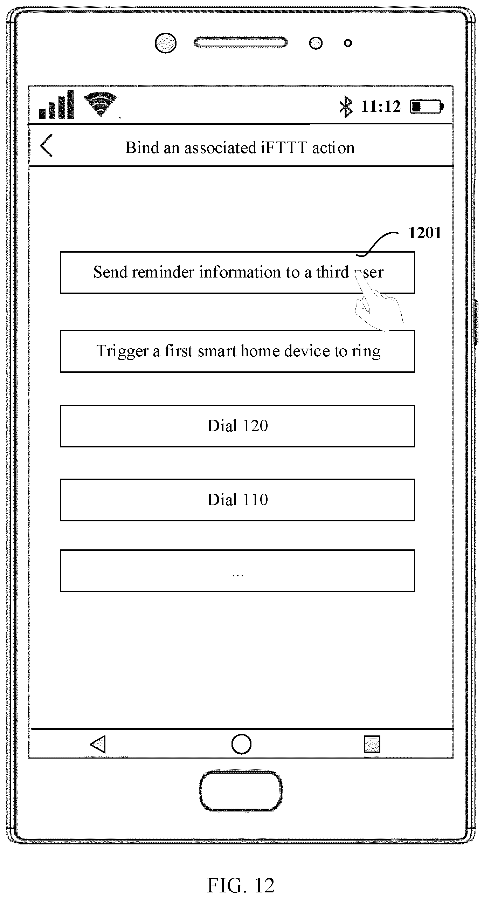

In addition, as shown in FIG. 11(a), the first user may tap a "Set a task" icon 1101 on the interface of "Create smart". As shown in FIG. 11(b), the mobile phone displays an interface including "Bind an associated IFTTT action" in response to the tap operation of the first user. Further, as shown in FIG. 11(c), the first user may further tap a "Bind an associated IFTTT action" icon 1102. As shown in FIG. 11(d), the mobile phone displays an interface of "Bind an IFTTT action" in response to the tap operation of the first user. The interface includes a plurality of actions or events. For example, the IFTTT action includes: "Send reminder information to a third user", "Trigger a first smart home device to ring", "Dial 120", "Dial 110", and the like. As shown in FIG. 12, the first user may tap an option of a "Send reminder information to a third user" icon 1201. To be specific, the second operation may include an operation that the first user taps, selects, and/or fills in the area F, the area G, the area H, and the area I in (b) in FIG. 10, and an operation that the first user taps the "Bind an associated IFTTT action" icon and/or selects "Send reminder information to the user" in FIG. 12.

Step 410: The electronic device sets a first rule in response to the second operation.

After receiving the second operation, the electronic device creates, in response to the second operation, a linkage task related to the scenario event. The linkage task may also be referred to as the first rule. The linkage task includes the linkage condition and the linkage event. It may also be understood as that the linkage task indicates to execute the linkage event if the linkage condition is met. The linkage condition is related to a quantity of occurrence times and/or occurrence duration of the scenario event.

The linkage condition in this embodiment of this application includes at least one of the following: The quantity of occurrence times of the scenario event is greater than or equal to a first preset threshold; the occurrence duration of the scenario event is greater than or equal to a second preset threshold; a quantity of occurrence times of the scenario event within a second preset time period is greater than or equal to a third preset threshold; and occurrence duration of the scenario event within a third preset time period is greater than or equal to a fourth preset threshold, and the like. The first preset threshold and the third preset threshold are in a same unit, which may be a second, a minute, an hour, or the like. The second preset threshold and the fourth preset threshold represent a quantity. In addition, the first preset threshold may be the same as or different from the third preset threshold, and the second preset threshold may be the same as or different from the fourth preset threshold. It may be understood that, in actual application, the first preset threshold, the second preset threshold, the third preset threshold, or the fourth preset threshold may be set based on a requirement. This is not specifically limited herein.

The executing the linkage event in this embodiment of this application includes at least one of the following: Sending abnormal information to a terminal device, where the abnormal information is used to remind a user who uses one or more first smart home devices of an exception; stopping running the smart home device; and triggering another smart home device (for example, the first smart home device or a second smart home device other than the first smart home device) to perform a second function. For example, in a scenario in which an elderly person makes lunch in the foregoing scenario description, a linkage event that is executed may be closing a valve of a cooking gas tank, opening a smart door and window for ventilation, or the like.

For example, the foregoing example is still used. The "getting up at night to urinate" scenario is used as an example. As shown in (b) in FIG. 10, the first user may select a "getting up at night to urinate" event in the area F in (b) in FIG. 10, select " one day" in the area G, select "greater than" in the area H, and select "3" in the area I. In addition, as shown in FIG. 12, the mobile phone determines a linkage action (or referred to as the linkage event) in response to the tap operation of the first user on the "Send reminder information to a third user" icon 1201. Further, related information (for example, a mobile phone number, an email address, and an account) of the third user associated with the linkage event may be set. Certainly, specific content of the reminder information may be further set. So far, the linkage task is successfully set. The linkage condition is that the quantity of execution times of the "getting up at night to urinate" scenario event is "greater than" "3" "within one day", and the linkage task is sending reminder information to the third user. In other words, the linkage task includes: When the quantity of execution times of the "getting up at night to urinate" scenario event is "greater than" "3" "within one day", send reminder information to the third user. It may be understood that, the linkage condition shown in (b) in FIG. 10 is related to the quantity of execution times. In actual application, the linkage condition may alternatively be described as the example in the foregoing scenario. The linkage condition is related to the quantity of occurrence times of the scenario event or a time interval of scenario events. This is not specifically limited herein.

It should be noted that, if the linkage condition in the linkage task is set for an existing scenario, the linkage condition (or referred to as the scenario event care condition) may be directly set in an interface in FIG. 6(c). In other words, if the linkage condition in the linkage task is set for the existing scenario, the "Scenario event management" icon 602 may not need to be tapped in FIG. 6(c).

The third user in this embodiment of this application may be the first user who creates the new scenario event, or may be the second user who uses the smart home device, or may be another user. This is not specifically limited herein.

Step 411: The electronic device sends the linkage task to the cloud server. This step is optional.

Optionally, after creating the linkage task related to the scenario event, the electronic device may send the linkage task to the home hub or cloud server. The home hub or cloud server monitors the linkage condition and/or triggers the linkage task. Certainly, the electronic device may alternatively monitor the linkage condition and/or trigger the linkage task. This is not specifically limited herein.

Step 412: Monitor the smart home device, and execute the linkage event if the linkage condition is met.

Optionally, the electronic device or the home hub monitors one or more smart home devices, performs, within a monitoring time range based on a specified scenario event, a matching operation on an event triggered by the smart home device and the specified scenario event, and counts once when matching of the scenario operation sequence is completed once.

In the foregoing matching process, matching may be performed on three detected events based on a time sequence of the plurality of first events in the "getting up at night to urinate" scenario in Table 3. If it is detected that the three events are the same as the three first events in the "getting up at night to urinate" scenario and have a same time sequence, count once. Certainly, matching of the tolerance may further be added. To be specific, if it is detected that the three events are the same as the three first events in the "getting up at night to urinate" scenario and have the same time sequence, but a time interval between the 2^{nd} second event and the 3^{rd} second event is greater than 10 seconds (which is a tolerance value between the 2^{nd} second event and the 3^{rd} second event in the "getting up at night to urinate" scenario), it is determined that the three events are not matched, and the counting is not performed.

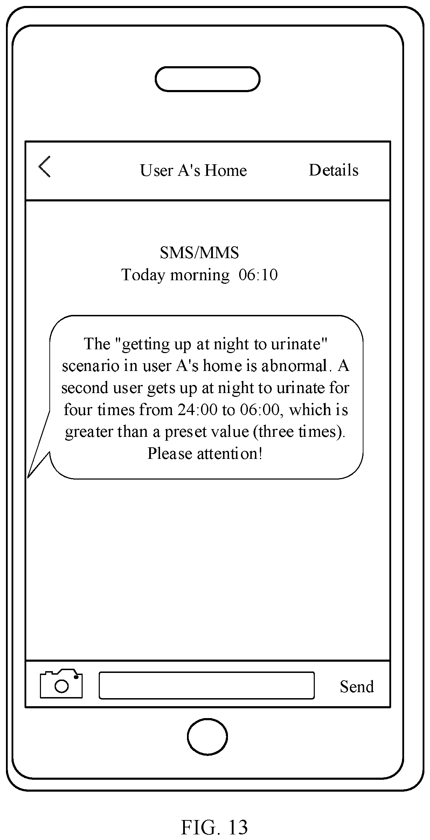

For example, the foregoing example is still used. If the specified scenario event is that the "getting up at night to urinate" scenario occurs four times in a range from 24:00 to 06:00, which exceeds three times in the linkage condition, the linkage event (for example, reminder information is sent to the terminal device, so that a third user using the terminal device knows that an exception occurs in the "getting up at night to urinate" scenario) is executed. Content and a format of the reminder information is not specifically limited herein. For example, as shown in FIG. 13, reminder information received by the mobile phone of the third user is: "The "getting up at night to urinate" scenario in user A's home is abnormal. A second user gets up at night to urinate for four times from 24:00 to 06:00, which is greater than a preset value (three times). Please attention!". In this case, the third user can discover a physical exception of the second user in time.

The method provided in embodiments of this application may include some or all of the steps shown in FIG. 4. In a possible implementation, the method provided in embodiments of this application may include step 401 to step 405. In another possible implementation, the method provided in embodiments of this application may include step 406 to step 411. In another possible implementation, the method provided in embodiments of this application may include step 406, step 409, step 410, and step 411. In another possible implementation, the method provided in embodiments of this application may include step 401 to step 411.

For example, if the user perceives that recently the elderly person frequently gets up at night to urinate, and wants to perform smart care for the elderly person, the user starts recording the "getting up at night to urinate" scenario event before going to bed on March 10. Correspondingly, step 401 to step 405 are performed. On the morning of March 11, the user turns on the mobile phone, views the recorded "getting up at night to urinate" scenario event, and then creates a linkage task. Correspondingly, steps 406 to 410 are performed. Therefore, if the elderly person frequently gets up at night to urinate (which exceeds a preset value set by the user), the user may receive abnormal information on the mobile phone, and correspondingly, step 412 is performed, so that smart care for the elderly person is provided. In addition, the user may further select one or more second events obtained through recording, so as to determine one or more first events included in the scenario event, and the corresponding step 407 and step 408 are performed. In an entire process, a quantity of times of manual operation of the user is reduced, and complexity of creating a scenario event is reduced. In addition, the scenario event generated by recording better satisfies an actual use habit of the elderly person on each smart home device when the elderly person gets up at night to urinate. In this way, accuracy of smart care is improved, and incorrect care caused by a scenario event that does not satisfy a user habit is avoided.

In addition, there may be another possible time sequence of the steps in this embodiment of this application shown in FIG. 4. For example, step 407 and step 408 may be performed after step 409. This is not specifically limited herein.

In this embodiment of this application, the scenario event is generated by recording one or more first events that occur within a period of time, so that complexity of a linkage scenario configuration operation for the user is reduced. Further, the scenario operation sequence is recorded in a recording manner, so that the generated scenario event better satisfies the actual use habit of the user. In addition, by setting the linkage task associated with the scenario event, the smart care can be provided for the user who uses the smart device.

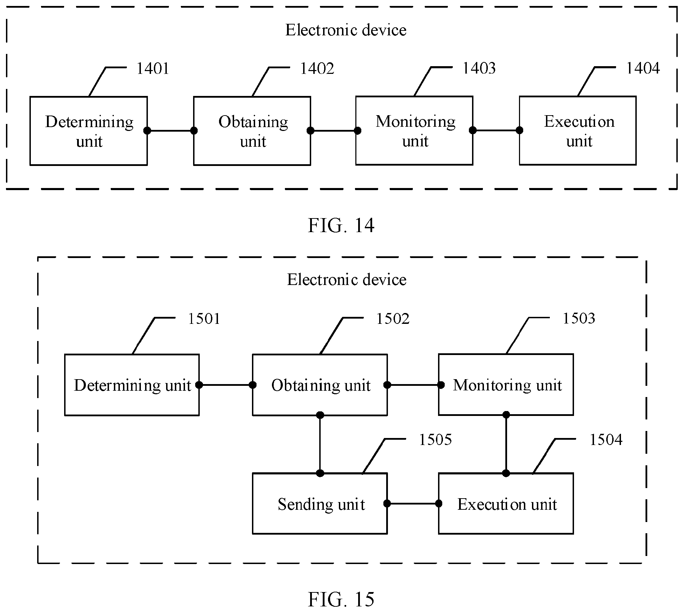

The following describes an electronic device in embodiments of this application. Refer to FIG. 14. The electronic device may be a local device (for example, a mobile phone or a camera) or a cloud device. The electronic device includes a determining unit 1401, an obtaining unit 1402, a monitoring unit 1403, and an execution unit 1404. Operations performed by units in the electronic device are similar to operations performed by the electronic device in the embodiment shown in the foregoing FIG. 4 to FIG. 12. Details are not described herein again.

FIG. 15 shows another embodiment of an electronic device in embodiments of this application. The electronic device may be a local device (for example, a mobile phone or a camera) or a cloud device. The electronic device includes a determining unit 1501, an obtaining unit 1502, a monitoring unit 1503, an execution unit 1504, and a sending unit 1505. Operations performed by units in the electronic device are similar to operations performed by the electronic device in the embodiment shown in the foregoing FIG. 4 to FIG. 12. Details are not described herein again.

This application provides an electronic device. The electronic device is coupled to a memory, and is configured to read and execute instructions stored in the memory, so that the electronic device implements the steps of the method performed by the electronic device in any one of the implementations in the foregoing FIG. 4 to FIG. 12. In a possible design, the electronic device is a chip or a system-on-a-chip.

This application provides a chip system. The chip system includes a processor, and is configured to support an electronic device in implementing functions in the foregoing aspects, for example, sending or processing data and/or information in the foregoing method. In a possible design, the chip system further includes a memory. The memory is configured to store necessary program instructions and data. The chip system may include a chip, or may include a chip and another discrete component.

This application further provides a processor, configured to be coupled to a memory, and configured to perform a method and functions that are related to an electronic device in any one of the foregoing embodiments.

This application further provides a computer-readable storage medium. The computer-readable storage medium stores a computer program. When the computer program is executed by a computer, a method and procedures related to an electronic device in any one of the foregoing method embodiments are implemented. Correspondingly, the computer may be the foregoing electronic device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Names of messages/frames/information, modules, units, or the like provided in embodiments of this application are merely examples, and other names may be used provided that the messages/frames/information, modules, units, or the like have same functions.

The terms used in embodiments of this application are merely intended to describe specific embodiments, but are not intended to limit the present invention. The terms "a", "the", and "this" of singular forms used in embodiments of this application are also intended to include plural forms, unless otherwise specified in a context clearly. It should be further understood that, in descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

Depending on the context, for example, words "if" used herein may be explained as "while" or "when" or "in response to determining" or "in response to detecting". Similarly, depending on the context, phrases "if determining" or "if detecting (a stated condition or event)" may be explained as "when determining" or "in response to determining" or "when detecting (the stated condition or event)" or "in response to detecting (the stated condition or event)".

The foregoing embodiments are merely intended for describing the technical solutions of this application, rather than limiting this application.

## Claims

1. An event processing method, comprising:
determining a scenario event, wherein the scenario event comprises one or more first events, the one or more first events are obtained by monitoring one or more first smart devices, and the first event comprises that the first smart device performs a first function, or comprises that a state of the first smart device changes;
obtaining a first rule, wherein the first rule comprises a linkage condition and a linkage event, the linkage condition is related to the scenario event, and the linkage event is used to remind that a user who uses the one or more first smart devices is abnormal, the abnormal user having a physical or emotional exception; and
monitoring the one or more first smart devices, and executing the linkage event if the one or more first smart devices meet the linkage condition.

2. The method according to claim 1, wherein the determining a scenario event comprises:
monitoring a function performed by the one or more first smart devices or a state change of the one or more first smart devices in a first preset time period, to obtain one or more second events, wherein the one or more second events comprise the one or more first events; and
determining that the scenario event comprises the one or more first events.

3. The method according to claim 1, wherein the method further comprises:
sending request information to a cloud device, wherein the request information indicates the cloud device to monitor a function performed by the one or more first smart devices or a state change of the one or more first smart devices in a first preset time period; and
the determining a scenario event comprises:
receiving one or more second events that are sent by the cloud device and that are obtained through monitoring, wherein the one or more second events comprise the one or more first events; and
determining that the scenario event comprises the one or more first events.

4. The method according to claim 2 or 3, wherein the determining that the scenario event comprises the one or more first events comprises:
presenting the one or more second events;
receiving a first operation of a first user; and
in response to the first operation, determining the one or more first events from the one or more second events, wherein a quantity of first events is less than or equal to a quantity of second events.

5. The method according to any one of claims 1 to 4, wherein the scenario event further comprises first information associated with the first event, and the first information comprises at least one of an occurrence place of the first event, an identifier of the first smart device, the first function, a time interval between at least two first events, and a time sequence relationship between the at least two first events.

6. The method according to any one of claims 1 to 5, wherein the obtaining a first rule comprises:
receiving a second operation of the first user; and
setting the first rule in response to the second operation.

7. The method according to any one of claims 1 to 6, wherein the linkage condition is related to a quantity of occurrence times and/or occurrence duration of the scenario event.

8. The method according to claim 7, wherein the linkage condition comprises at least one of the following:
the quantity of occurrence times of the scenario event is greater than or equal to a first preset threshold;
the occurrence duration of the scenario event is greater than or equal to a second preset threshold;
a quantity of occurrence times of the scenario event in a second preset time period is greater than or equal to a third preset threshold; and
occurrence duration of the scenario event in a third preset time period is greater than or equal to a fourth preset threshold.

9. The method according to any one of claims 1 to 8, wherein the executing the linkage event comprises at least one of the following:
sending abnormal information to a terminal device, wherein the abnormal information is used to remind that the user who uses the one or more first smart devices is abnormal;
stopping running the first smart device; and
triggering a second smart device to perform a second function.

10. The method according to any one of claims 1 to 9, wherein the one or more first smart devices belong to a same account of the first user.

11. The method according to any one of claims 1 to 10, wherein the method is applied to a smart home scenario, and the first smart device is a smart home device.

12. The method according to claim 11, wherein the one or more first smart devices comprise a first smart light in a bedroom, a second smart light in a bathroom, and a smart flush toilet in the bathroom; and the scenario event comprises three first events, wherein a 1^{st} first event comprises that the first smart light changes from turned off to turned on, a 2^{nd} first event comprises that the second smart light changes from turned off to turned on, and a 3^{rd} first event comprises that the smart flush toilet performs a flush function; and
the executing the linkage event if the one or more first smart devices meet the linkage condition comprises:
if the quantity of occurrence times of the scenario event in the second preset time period is greater than or equal to the third preset threshold, sending the abnormal information to the terminal device, wherein the abnormal information is used to remind that the user who uses the one or more first smart devices is abnormal.

13. An electronic device (102), comprising a processor, wherein the processor is coupled to a memory, the memory stores program instructions, and when the program instructions stored in the memory are executed by the processor, the method according to any one of claims 1 to 12 is implemented.

14. A computer-readable storage medium, comprising a program, wherein when the program is run on a computer, the computer is enabled to perform the method according to any one of claims 1 to 12.

15. A computer program product, wherein when the computer program product is executed on a computer, the computer is enabled to perform the method according to any one of claims 1 to 12.

## Patentansprüche

1. Ereignisverarbeitungsverfahren, das umfasst:
Bestimmen eines Szenarioereignisses, wobei das Szenarioereignis ein oder mehrere erste Ereignisse umfasst, wobei das eine oder die mehreren ersten Ereignisse durch Überwachen einer oder mehrerer erster intelligenter Vorrichtungen erhalten werden, und das erste Ereignis umfasst, dass die erste intelligente Vorrichtung eine erste Funktion durchführt, oder umfasst, dass sich ein Zustand der ersten intelligenten Vorrichtung ändert;
Erhalten einer ersten Regel, wobei die erste Regel eine Verknüpfungsbedingung und ein Verknüpfungsereignis umfasst, wobei sich die Verknüpfungsbedingung auf das Szenarioereignis bezieht und das Verknüpfungsereignis verwendet wird, um daran zu erinnern, dass ein Benutzer, der die eine oder die mehreren ersten intelligenten Vorrichtungen verwendet, abnormal ist, wobei der abnormale Benutzer eine physische oder emotionale Ausnahme aufweist; und
Überwachen der einen oder der mehreren ersten intelligenten Vorrichtungen und Ausführen des Verknüpfungsereignisses, falls die eine oder die mehreren ersten intelligenten Vorrichtungen die Verknüpfungsbedingung erfüllen.

2. Verfahren nach Anspruch 1, wobei das Bestimmen eines Szenarioereignisses umfasst:
Überwachen einer von der einen oder den mehreren ersten intelligenten Vorrichtungen durchgeführten Funktion oder einer Zustandsänderung der einen oder der mehreren ersten intelligenten Vorrichtungen in einer ersten voreingestellten Zeitspanne, um ein oder mehrere zweite Ereignisse zu erhalten, wobei das eine oder die mehreren zweiten Ereignisse das eine oder die mehreren ersten Ereignisse umfassen; und
Bestimmen, dass das Szenarioereignis das eine oder die mehreren ersten Ereignisse umfasst.

3. Verfahren nach Anspruch 1, wobei das Verfahren ferner umfasst:
Senden von Anforderungsinformationen an eine Cloud-Vorrichtung, wobei die Anforderungsinformationen der Cloud-Vorrichtung angeben, eine von der einen oder den mehreren ersten intelligenten Vorrichtungen durchgeführte Funktion oder eine Zustandsänderung der einen oder der mehreren ersten intelligenten Vorrichtungen in einer ersten voreingestellten Zeitspanne zu überwachen; und
das Bestimmen eines Szenarioereignisses umfasst:
Empfangen eines oder mehrerer zweiter Ereignisse, die von der Cloud-Vorrichtung gesendet werden und die durch Überwachen erhalten werden, wobei das eine oder die mehreren zweiten Ereignisse das eine oder die mehreren ersten Ereignisse umfassen; und
Bestimmen, dass das Szenarioereignis das eine oder die mehreren ersten Ereignisse umfasst.

4. Verfahren nach Anspruch 2 oder 3, wobei das Bestimmen, dass das Szenarioereignis das eine oder die mehreren ersten Ereignisse umfasst, umfasst:
Darstellen des einen oder der mehreren zweiten Ereignisse;
Empfangen einer ersten Operation eines ersten Benutzers; und
als Reaktion auf die erste Operation, Bestimmen des einen oder der mehreren ersten Ereignisse aus dem einen oder den mehreren zweiten Ereignissen, wobei eine Anzahl von ersten Ereignissen kleiner als oder gleich einer Anzahl von zweiten Ereignissen ist.

5. Verfahren nach einem der Ansprüche 1 bis 4, wobei das Szenarioereignis ferner erste Informationen umfasst, die mit dem ersten Ereignis verknüpft sind, und die ersten Informationen mindestens eines von einem Auftrittsort des ersten Ereignisses, einer Kennung der ersten intelligenten Vorrichtung, die erste Funktion, ein Zeitintervall zwischen mindestens zwei ersten Ereignissen und einer zeitlichen Abfolgebeziehung zwischen den mindestens zwei ersten Ereignissen umfasst.

6. Verfahren nach einem der Ansprüche 1 bis 5, wobei das Erhalten einer ersten Regel umfasst:
Empfangen einer zweiten Operation des ersten Benutzers; und
Einstellen der ersten Regel als Reaktion auf die zweite Operation.

7. Verfahren nach einem der Ansprüche 1 bis 6, wobei sich die Verknüpfungsbedingung auf eine Anzahl von Auftrittszeitpunkten und/oder einer Auftrittsdauer des Szenarioereignisses bezieht.

8. Verfahren nach Anspruch 7, wobei die Verknüpfungsbedingung mindestens eines der Folgenden umfasst:
die Anzahl von Auftrittszeitpunkten des Szenarioereignisses größer als oder gleich einem ersten voreingestellten Schwellenwert ist;
die Auftrittsdauer des Szenarioereignisses größer als oder gleich einem zweiten voreingestellten Schwellenwert ist;
eine Anzahl von Auftrittszeitpunkten des Szenarioereignisses in einer zweiten voreingestellten Zeitspanne größer als oder gleich einem dritten voreingestellten Schwellenwert ist; und
eine Auftrittsdauer des Szenarioereignisses in einer dritten voreingestellten Zeitspanne größer als oder gleich einem vierten voreingestellten Schwellenwert ist.

9. Verfahren nach einem der Ansprüche 1 bis 8, wobei das Ausführen des Verknüpfungsereignisses mindestens eines der Folgenden umfasst:
Senden von abnormalen Informationen an ein Endgerät, wobei die abnormalen Informationen verwendet werden, um daran zu erinnern, dass der Benutzer, der die eine oder die mehreren ersten intelligenten Vorrichtungen verwendet, abnormal ist;
Beenden des Betriebs der ersten intelligenten Vorrichtung; und
Auslösen einer zweiten intelligenten Vorrichtung, um eine zweite Funktion durchzuführen.

10. Verfahren nach einem der Ansprüche 1 bis 9, wobei die eine oder die mehreren ersten intelligenten Vorrichtungen zu demselben Konto des ersten Benutzers gehören.

11. Verfahren nach einem der Ansprüche 1 bis 10, wobei das Verfahren auf ein Smart-Home-Szenario angewendet wird und die erste intelligente Vorrichtung eine Smart-Home-Vorrichtung ist.

12. Verfahren nach Anspruch 11, wobei die eine oder die mehreren ersten intelligenten Vorrichtungen eine erste intelligente Leuchte in einem Schlafzimmer, eine zweite intelligente Leuchte in einem Badezimmer und ein intelligentes Spül-WC in dem Badezimmer umfassen; und das Szenarioereignis drei erste Ereignisse umfasst, wobei ein 1. erstes Ereignis umfasst, dass die erste intelligente Leuchte von ausgeschaltet zu eingeschaltet wechselt, ein 2. erstes Ereignis umfasst, dass die zweite intelligente Leuchte von ausgeschaltet zu eingeschaltet wechselt, und ein 3. erstes Ereignis umfasst, dass das intelligente Spül-WC eine Spülfunktion durchführt; und
das Ausführen des Verknüpfungsereignisses, falls die eine oder die mehreren ersten intelligenten Vorrichtungen die Verknüpfungsbedingung erfüllen, umfasst:
falls die Anzahl von Auftrittszeitpunkten des Szenarioereignisses in der zweiten voreingestellten Zeitspanne größer als oder gleich dem dritten voreingestellten Schwellenwert ist, Senden der abnormalen Informationen an das Endgerät, wobei die abnormalen Informationen verwendet werden, um daran zu erinnern, dass der Benutzer, der die eine oder die mehreren ersten intelligenten Vorrichtungen verwendet, abnormal ist.

13. Elektronische Vorrichtung (102), die einen Prozessor umfasst, wobei der Prozessor mit einem Speicher gekoppelt ist, der Speicher Programmanweisungen speichert, und wenn die im Speicher gespeicherten Programmanweisungen durch den Prozessor ausgeführt werden, das Verfahren nach einem der Ansprüche 1 bis 12 implementiert wird.

14. Computerlesbares Speichermedium, das ein Programm umfasst, wobei, wenn das Programm auf einem Computer abläuft, der Computer aktiviert wird, um das Verfahren nach einem der Ansprüche 1 bis 12 durchzuführen.

15. Computerprogrammprodukt, wobei, wenn das Computerprogrammprodukt auf einem Computer ausgeführt wird, der Computer aktiviert wird, um das Verfahren nach einem der Ansprüche 1 bis 12 durchzuführen.

## Revendications

1. Procédé de traitement d'événement, comprenant :
la détermination d'un événement de scénario, dans lequel l'événement de scénario comprend un ou plusieurs premiers événements, le ou les premiers événements sont obtenus en surveillant un ou plusieurs premiers dispositifs intelligents, et le premier événement comprend le fait que le premier dispositif intelligent réalise une première fonction, ou comprend le fait qu'un état du premier dispositif intelligent change ;
l'obtention d'une première règle, dans lequel la première règle comprend une condition de liaison et un événement de liaison, la condition de liaison est liée à l'événement de scénario, et l'événement de liaison est utilisé pour rappeler qu'un utilisateur qui utilise le ou les premiers dispositifs intelligents est anormal, l'utilisateur anormal présentant une exception physique ou émotionnelle ; et
la surveillance du ou des premiers dispositifs intelligents, et l'exécution de l'événement de liaison si le ou les premiers dispositifs intelligents satisfont à la condition de liaison.

2. Procédé selon la revendication 1, dans lequel la détermination d'un événement de scénario comprend :
la surveillance d'une fonction effectuée par le ou les premiers dispositifs intelligents ou un changement d'état du ou des premiers dispositifs intelligents au cours d'une première période de temps prédéfinie, afin d'obtenir un ou plusieurs seconds événements, dans lequel le ou les seconds événements comprennent le ou les premiers événements ; et
la détermination du fait que l'événement de scénario comprend le ou les premiers événements.

3. Procédé selon la revendication 1, dans lequel le procédé comprend en outre :
l'envoi d'informations de requête à un dispositif en nuage, dans lequel les informations de requête indiquent au dispositif en nuage de surveiller une fonction effectuée par le ou les premiers dispositifs intelligents ou un changement d'état du ou des premiers dispositifs intelligents au cours d'une première période de temps prédéfinie ; et
la détermination d'un événement de scénario comprend :
la réception d'un ou de plusieurs seconds événements qui sont envoyés par le dispositif en nuage et qui sont obtenus par le biais d'une surveillance, dans lequel le ou les seconds événements comprennent le ou les premiers événements ; et
la détermination du fait que l'événement de scénario comprend le ou les premiers événements.

4. Procédé selon la revendication 2 ou 3, dans lequel la détermination du fait que l'événement de scénario comprend le ou les premiers événements comprend :
la présentation du ou des seconds événements ;
la réception d'une première opération d'un premier utilisateur ; et
en réponse à la première opération, la détermination du ou des premiers événements à partir du ou des seconds événements, dans lequel un nombre de premiers événements est inférieur ou égal à un nombre de seconds événements.

5. Procédé selon l'une quelconque des revendications 1 à 4, dans lequel l'événement de scénario comprend en outre des premières informations associées au premier événement, et les premières informations comprennent au moins l'un parmi un lieu d'occurrence du premier événement, un identifiant du premier dispositif intelligent, la première fonction, un intervalle de temps entre au moins deux premiers événements, et une relation de séquence temporelle entre les au moins deux premiers événements.

6. Procédé selon l'une quelconque des revendications 1 à 5, dans lequel l'obtention d'une première règle comprend :
la réception d'une seconde opération du premier utilisateur ; et
la définition de la première règle en réponse à la seconde opération.

7. Procédé selon l'une quelconque des revendications 1 à 6, dans lequel la condition de liaison est liée à un nombre de fois d'occurrence et/ou à une durée d'occurrence de l'événement de scénario.

8. Procédé selon la revendication 7, dans lequel la condition de liaison comprend au moins l'un de ce qui suit :
le nombre de fois d'occurrence de l'événement de scénario est supérieur ou égal à un premier seuil prédéfini ;
la durée d'occurrence de l'événement de scénario est supérieure ou égale à un deuxième seuil prédéfini ;
un nombre de fois d'occurrence de l'événement de scénario au cours d'une deuxième période de temps prédéfinie est supérieur ou égal à un troisième seuil prédéfini ; et
une durée d'occurrence de l'événement de scénario au cours d'une troisième période de temps prédéfinie est supérieure ou égale à un quatrième seuil prédéfini.

9. Procédé selon l'une quelconque des revendications 1 à 8, dans lequel l'exécution de l'événement de liaison comprend au moins l'un de ce qui suit :
l'envoi d'informations anormales à un dispositif terminal, dans lequel les informations anormales sont utilisées pour rappeler que l'utilisateur qui utilise le ou les premiers dispositifs intelligents est anormal ;
l'arrêt du fonctionnement du premier dispositif intelligent ; et
le déclenchement d'un second dispositif intelligent pour réaliser une seconde fonction.

10. Procédé selon l'une quelconque des revendications 1 à 9, dans lequel le ou les premiers dispositifs intelligents appartiennent à un même compte du premier utilisateur.

11. Procédé selon l'une quelconque des revendications 1 à 10, dans lequel le procédé est appliqué à un scénario de maison intelligente, et le premier dispositif intelligent est un dispositif de maison intelligente.

12. Procédé selon la revendication 11, dans lequel le ou les premiers dispositifs intelligents comprennent une première lumière intelligente dans une chambre à coucher, une seconde lumière intelligente dans une salle de bains et des toilettes à chasse d'eau intelligentes dans la salle de bains ; et l'événement de scénario comprend trois premiers événements, dans lequel un 1^{er} premier événement comprend le fait que la première lumière intelligente passe d'éteinte à allumée, un 2^{e} premier événement comprend le fait que la seconde lumière intelligente passe d'éteinte à allumée, et un 3^{e} premier événement comprend le fait que les toilettes à chasse d'eau intelligentes réalisent une fonction de chasse d'eau ; et
l'exécution de l'événement de liaison si le ou les premiers dispositifs intelligents satisfont à la condition de liaison comprend :
si le nombre de fois d'occurrence de l'événement de scénario au cours de la deuxième période de temps prédéfinie est supérieur ou égal au troisième seuil prédéfini, l'envoi des informations anormales au dispositif terminal, dans lequel les informations anormales sont utilisées pour rappeler que l'utilisateur qui utilise le ou les premiers dispositifs intelligents est anormal.

13. Dispositif électronique (102), comprenant un processeur, dans lequel le processeur est couplé à une mémoire, la mémoire stocke des instructions de programme, et lorsque les instructions de programme stockées dans la mémoire sont exécutées par le processeur, le procédé selon l'une quelconque des revendications 1 à 12 est mis en œuvre.

14. Support de stockage lisible par ordinateur, comprenant un programme, dans lequel, lorsque le programme est exécuté sur un ordinateur, l'ordinateur est activé pour réaliser le procédé selon l'une quelconque des revendications 1 à 12.

15. Produit-programme d'ordinateur, dans lequel, lorsque le produit-programme d'ordinateur est exécuté sur un ordinateur, l'ordinateur est activé pour réaliser le procédé selon l'une quelconque des revendications 1 à 12.
